# EUROPEAN PATENT APPLICATION

(11) **EP 3 163 437 A1**
(43) Date of publication of application: **03.05.2017**
(21) Application number: 15812671.4
(22) Date of filing: 25.06.2015
(51) Int. Cl.: G06F 9/44

(54) **SYSTEM ELEMENT VIEW-BASED VISUAL MODELLING METHOD FOR CONSTRUCTING SYSTEM VIEW**

(30) Priority: 25.06.2014 CN 201410293613
(71) Applicant: Chengdu Puzhong Software Limited Company, Chengdu, Sichuan 610041 (CN)
(72) Inventor: FU, Changming, Chengdu Sichuan 610057 (CN)
(74) Representative: Gallego Jiménez, José Fernando
(86) International application number: PCT/CN2015/000452
(87) International publication number: WO 2015/196781

(57) **Abstract**

A system element view-based visual modeling method for constructing system view. After determining basic constituents of the system element view, the present invention constructs system views through a hierarchy view, interface views, algorithm views, process views, and transfer views as step features and thereby provides a specification for visual system modeling in modeling in various fields; such specification has advantages including generality and convenience; system views constructed through the present invention are executable, have clear structures, adjustable hierarchies, and controllable granularities; this modeling method supports both top-down analysis and bottom-up integration for modeling in various systems including software systems and information systems. The modeling method is simple and completely visual, thereby even those not skilled in any modeling language nor computer programming language can easily and independently construct the system view, eliminating the tedious and unnecessary communication with and dependence on professional modelers and application developers, greatly reducing modeling time.

## Description

### TECHNICAL FIELD

The present invention relates to the technical field of software engineering, and more specifically, it is a system element view-based visual modeling method for constructing system view and a computer program product thereof.

### TECHNICAL BACKGROUND

A system is a joint name for objects and events in the real or imaginary world, and a system model refers to a structured description of knowledge about the objects, especially complex objects. System modeling is an action or a process in which a system model is constructed based on laws and features of the objects. Long before the emergence of software, system modeling already exists widely in various practical social activities such as scientific research, engineering, military, and industries. With developing of the system modeling activity, there are a variety of representations of the system model, such as by a language, a text, a formula, a graph, and so on. Compared with other representations of the system model, the representation by the graph is more loved due to its intuitiveness. A visual representation of the system model is referred to as a system view, which is an equivalent of the system model.

When specific systems are modeled, users found that these system models share many common constructions where these constructions can be described by a model called system element view. The system element view is a view describing system views; it is a visual representation of the system models and provides a set of graphic components and rules required for creating system views. The system element view is used as a specification for visual system modeling and plays a decisive role in the quality of system views and the efficiency of system modeling.

Precisely because of the important role system element view plays in system modeling, study of system element view has been a major focus. However, most of the system views are always limited to a certain type of descriptions of the system models rather than providing a universal description for general system view. Though UML (Unified Modeling Language) is a visual descriptive language developed from object oriented software methods, it is used as a system element view to a large extent and thus become an industry standard of the current mainstream object-oriented visual modeling languages. For system modeling, the UML has the following drawbacks: Firstly, UML cannot provide modeling methods: UML clearly states that it does not provide modeling methods and is only a descriptive language for modeling methods; UML is oriented towards programmers, targeting the development of modeling products in the software development process. In reality, it focuses on the description of implementation in object-oriented programming, not a general system modeling method beyond software development. Secondly, the lack of executability thereof is a fatal drawback: the UML lacks a rigorous theoretical support for modeling, which has been criticized by insiders; the deficiency of completeness and consistency results in a system view constructed by the UML being lack of executability, i.e., the view described by using UML cannot be directly converted into an executable software. The yielded software must be manually edited through codes in order to be executable by computers. This drawback makes the UML only be a supplementary expression tool for a system view rather than a true system element view. Thirdly, it is difficult to understand and use: the UML creates a lot of concepts, relations and diagrams. Relationships among these concepts, relations, and diagrams are loose and numerous. The UML is originally designed for programmers. However, the UML's complication and disorder are not only hard for programmers to grasp, but also even more difficult for industry experts to understand, far from satisfying the needs of modeling. The above comments can also be applied to sysML, a visual modeling language derived from the UML and oriented towards engineering.

In recent years, a visual modeling method based on graphically assembling of prefabricated components has been widely used for the system modeling in various sectors. As a visual system modeling tool widely used in the science and the engineering, Simlink is a typical representative of using this method. There are basic drawbacks in this visual modeling method based on assembling of prefabricated components: firstly, the system model must be assembled based on the prefabricated components so that the construction of the system model is seriously subject to the prefabricated components; interfaces of the prefabricated components are invariable so that such a visual modeling method is usually applied in specific sector-modeling based on a library of the components rather than suitable for a universal system modeling because it does not support to integrate the components with arbitrary interfaces; secondly, rules for assembling and operating the components are very simple as well and are basically working synergies among the components decided by transfer relationships of data. complexity for the transfer of the data makes readability of the view dramatically deteriorated as the number of the components increases, so that this method is actually applied only to describe relatively simple algorithms rather that largely complex systems though it is declared to be used in the system modeling.

In all, a system element view that is easy for ordinary industry personnel to grasp, provides a universal visual system modeling norm, supports system modeling in all fields, and constructs executable system views, currently is still lacking and in demand.

### SUMMARY OF THE INVENTION

In view of the above drawbacks of the prior art, the objective of the present invention is to provide a visual modeling method to construct system views based on a system element view in order to overcome the above drawbacks of the prior art.

The objective of the present invention is achieved by the following means.

A system element view-based visual modeling method for constructing system view, comprising a computer readable storage medium having a computer readable program code stored therein, said computer readable program code containing instructions executable by a processor of a computer system to implement the visual modeling method based on a system element view for constructing system views by processing data conforming to the system element view and describing the system view, wherein the system view refers to a visual representation of a system model and wherein the system element view refers to a visual representation of a system element-model, said system element view comprising:
a hierarchy graph which represents a hierarchy view in a tree structure of which a node is a component class symbol and which is used as a template to be configured in an actual system modeling environment to form the hierarchy view, wherein the component class symbol refers to a visual representation of a component class, wherein the hierarchy view refers to a visual representation of a hierarchy model, and wherein the tree structure, of which the nodes are component class symbols, is referred as a hierarchy tree;
an interface graph which represents interface views by an optional structure of a set of attribute symbols, a set of function symbols, and a set of event symbols, the interface graph is used as a template in the actual system modeling environment to be configured to form the interface views, wherein the interface view refers to a visual representation of an interface model, wherein the attribute symbol, the function symbol, and the event symbol refer to a representation of an attribute, a representation of a function, and a representation of an event, respectively, and wherein the function symbols include both algorithm function symbols as visual representations of algorithm functions and process function symbols as visual representations of process functions;
an algorithm graph which describes algorithm views by a tree structure of which nodes are operator symbols and which is used as a template in the actual system modeling environment to be configured to form the algorithm views, wherein the algorithm view refers to a visual representation of an algorithm model and wherein the operator symbol refers to a visual representation of an operator;
a process graph which describes process views by combining action symbols as nodes, and which is used as a template in the actual system modeling environment to be configured to form the process views, wherein the process view refers to a visual representation of a process model, and wherein the action symbol refers to a visual representation of an action;
a transfer graph which describes transfer views by both a set of input transfer symbols and a set of output transfer symbols and which is used as a template in the actual system modeling environment to be configured to form the transfer views, wherein the transfer view refers to a visual representation of a transfer view, and the transfer symbol in the set of the transfer symbols refers to a visual representation of a transfer.
specific steps to construct the system view by said five graphs being as follows:
   1) constructing the hierarchy view: the hierarchy graph reading in hierarchy view commands from the actual system modeling environment, wherein hierarchy view commands refers to commands such as creating a component class symbol, adding a component class symbol, selecting a component class symbol, naming a component class symbol, and deleting a component class symbol for the hierarchy tree and wherein the hierarchy graph performs corresponding operations on the component class symbol nodes in the hierarchy tree in response to hierarchy view commands to obtain the hierarchy view;
   2) constructing the interface views: constructing an interface view for each component class symbol of the hierarchy view obtained in the step 1), the steps for constructing each interface view including: the interface graph reading in interface view commands from the actual system modeling environment, wherein interface view commands refers to commands such as creating, selecting, naming, and deleting the attribute symbols, the function symbols, and the event symbols of involved component class symbol, wherein the interface graph performs corresponding operations in response to interface view commands to obtain the interface view, and wherein the algorithm views corresponding to algorithm function symbols are constructed by step 3) and the process views corresponding to process function symbols are constructed by the step 4);
   3) constructing the algorithm views: constructing an algorithm view for each algorithm function symbol obtained in the step 2), the steps for constructing each algorithm view including: the algorithm graph reading in algorithm view commands from the actual system modeling environment;
   4) constructing the process views: constructing a process view for each process function symbol obtained in the step 2), the steps for constructing each process view including: the process graph reading in process view command from the actual system modeling environment; and
   5) constructing the transfer views: constructing a transfer view for each action symbol in the process view obtained in the step 4), the steps for constructing each transfer view including: the transfer graph reading in transfer view commands from the actual system modeling environment, wherein transfer view commands refers to commands on such as adding a transfer symbol, adding a transfer symbol, and deleting a transfer symbol and wherein the transfer graph performs corresponding operations in response to transfer view commands to obtain the transfer view;
thereby the system view constructed by the hierarchy view, interface views, algorithm views, process views, and transfer views being accomplished.

The system element view applies the following modeling rules:
a combination of the process graph and the transfer graph provide a universal means to represent and configure functions; the algorithm graph provides a simplified alternative for replacing the combination of the process graph and the transfer graph if only operator symbols are used to implement the functions;
the system element view employs a parent-child structure as base recursive unit to recursively and visually describe the system view; the parent-child structure refers to a structure of parent-child relationships in a hierarchy tree, constituted by involved component class symbols and all of child component class symbols thereof;
the specific function symbol of the step 2) can only be either algorithm function symbol or process function symbol, not both;
the algorithm view commands stated in the step 3) refers to commands, such as adding an operator symbol, selecting an operator symbol, naming an operator symbol, as well as adding an assignment symbol, selecting an assignment symbol, and deleting an assignment symbol; the algorithm graph performs corresponding operations in response to the hierarchy view commands to obtain the algorithm view; the operator symbols include both logic operator symbols and computation operator symbols; the tree structure of which nodes are operator symbols is referred to as an algorithm tree; said assignment symbol refers to a visual representation of an assignment, and the set of the algorithm attribute symbols refers to a collection constituted by a set of attribute symbols of the involved component class symbols and sets of attribute symbols of all of operator symbols in the algorithm view;
the process view commands to construct the process view in step 4) refers to commands such as adding an action symbol, selecting an action symbol, naming an action symbol, and deleting an action symbol and the process graph performs corresponding operations in response to the process view commands to obtain the process view; the action symbols include both component action symbols and operator action symbols; said component action symbol refers to a representation of one use of a function symbol in the set of function symbols in the parent-child structure, the set of function symbols in the parent-child structure refers to a collection constituted by the set of function symbols of the involved component class symbol and the sets of function symbols of all child component class symbols in the parent-child structure; the operator action symbol refers to a representation of one use of operator symbol's function symbol; the process views include attribute process views and an event process views, the process graph includes attribute process graph and event process graph, the attribute process graph describes the attribute process view through a process tree as the structure, which is a tree structure constituted by action symbols as nodes; the event process graph describes an event process view by a set of event association symbols as the structure; the event association symbol in the set of event association symbols is an association relationship between an event symbol in a set of event symbols in a parent-child structure and an operator action symbol or a component action symbol; the set of event symbols in the parent-child structure refers to a collection constituted by the set of event symbols of the involved component class symbol and sets of event symbols of all of child component class symbols in the parent-child structure.

Besides action attribute symbols which refers to the attribute symbols of the component class symbols where the action symbol is, said attribute symbols relevant to transfer symbols are limited to those in the set of attribute symbols in the parent-child structure, which refers to a collection constituted by the set of the attribute symbols of the involved component class symbol and the sets of the attribute symbols of all of child component class symbols in the parent-child structure;
thus, after determining basic constituents of the system element view, the present invention constructs system views through a hierarchy view, interface views, algorithm views, process views, and transfer views as step features and thereby provides a specification for visual system modeling in modeling in various fields; such specification has advantages including generality and convenience; system views constructed through the present invention are executable, have clear structures, adjustable hierarchies, and controllable granularities; this modeling method supports both top-down analysis and bottom-up integration for modeling in various systems including software systems and information systems; the modeling method is simple and completely visual, thereby even those not skilled in any modeling language nor computer programming language can easily and independently construct the system view, eliminating the tedious and unnecessary communication with and dependence on professional modelers and application developers, greatly reducing modeling time.

In summary, the present invention has obvious advantages over the prior art as follows:
(1) executability: the system view constructed according to the present invention is executable, that is, has an integrity and a full consistency in which the system view can be mapped to a program executable by a computer;
(2) generality: the system view constructed according to the present invention has a clear structure, adjustable hierarchies, controllable granularities, and generality suitable for all types of systems. That is, not only suitable for algorithm modeling but also rapid prototyping of the system and even more suitable for large, complex system modeling; not only convenient for top-down analysis but also bottom up integration; not only suitable for system integration based on prefabricated units and system expansion based on customized units, but also suitable for distributed systems' interconnection and communication; not only suitable for practical engineering modeling, but also suitable for software system and information system modeling; not only suitable for equipment information systems' simulation modeling, but also suitable for MIS(management information system)'s modeling; not only suitable for desktop software system modeling, embedded device software system modeling, mobile terminal software system modeling, but also suitable for LAN software system modeling, WAN software system modeling, and cloud computation environmental software system modeling; not only suitable for applied software system modeling, but also suitable for software development platform modeling; and
(3) ease of use: the elements of the present invention are concise, rules thereof are simple, and methods thereof are universal. Even those not skilled in any complex modeling language nor any computer programming language can easily take advantage of the present invention to construct the system view with executability in a relatively short period of time, eliminating the tedious and unnecessary communication with and dependence on professional modelers and application developers, enabling the resultant system view to be more fitted to the expectations of those skilled in this art, and eliminating possible understanding errors of the professional modelers or the application developers; at the same time, because communication time is saved, modeling time is greatly reduced.

### BRIEF DESCRIPTION OF THE DRAWINGS

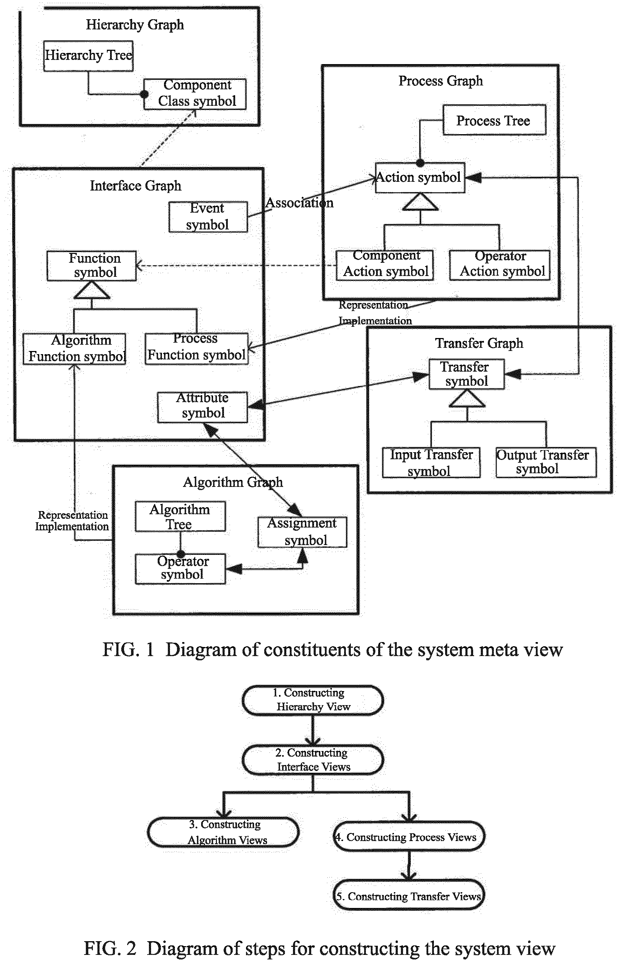

Fig. 1 is a diagram of constituents of the system element view according to this invention.
Fig. 2 is a diagram of steps for constructing the system view according to this invention.

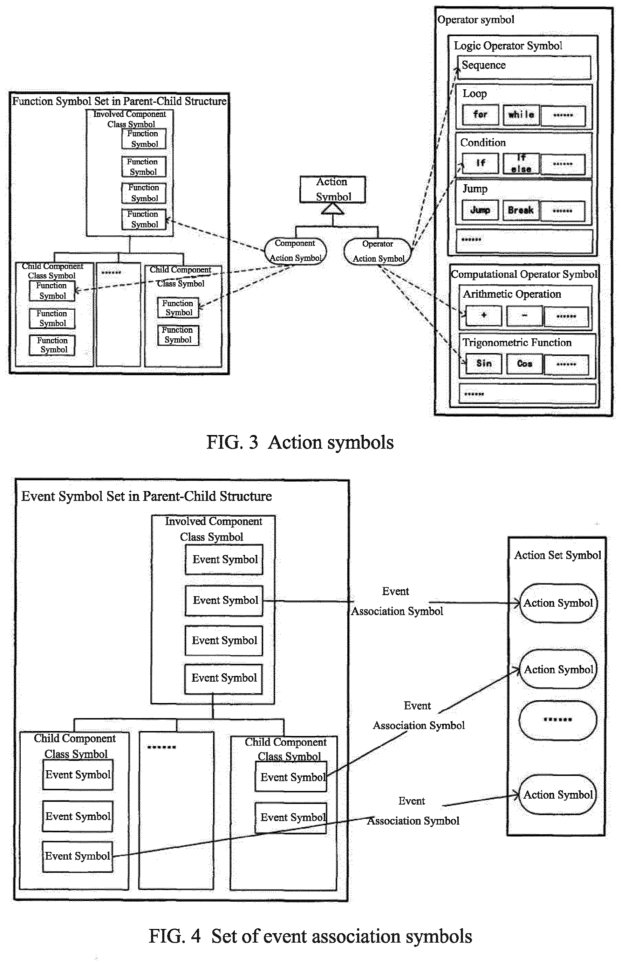

Fig. 3 schematically shows action symbols, a set of function symbols in a parent-child structure, and operator symbols.
Fig. 4 schematically shows a set of event associations, a set of event symbols in a parent-child structure, and actions.

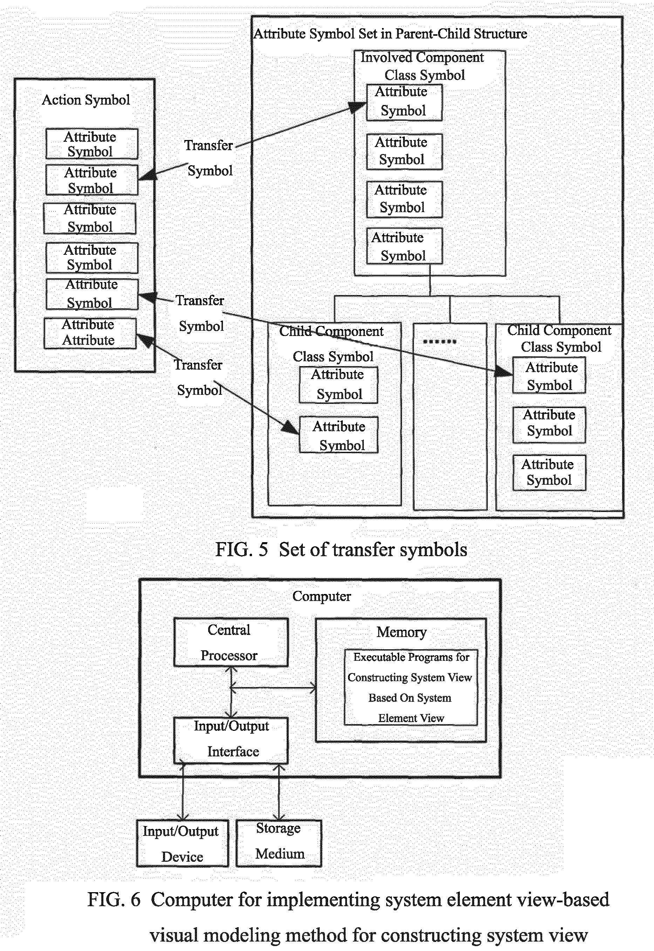

Fig. 5 schematically shows transfer symbols and a set of attribute symbols in a parent-child structure.
Fig. 6 is a block diagram of a computer for implementing a system element view- based visuaul modeling method for constructing system view.
Fig. 7 is the business management YWGL hierarchy view according to an embodiment A of which more details will be shown in some of the following figures. Fig. 8 is the business management YWGL interface view.
Fig. 9 is the sales management XSGL interface view.
Fig. 10 is the production management SCGL interface view.
Fig. 11 is the purchase management CGGL interface view.
Fig. 12 is the distributive sales product FXP interface view.
Fig. 13 is the direct sales product ZXP interface view.
Fig. 14 is the main parts ZJ interface view.
Fig. 15 is the auxiliary parts LJ interface view.
Fig. 16 is the finished products CP interface view.
Fig. 17 is the main parts processing algorithm view
Fig. 18 is the main parts delivery algorithm view.
Fig. 19 is the auxiliary parts processing algorithm view.
Fig. 20 is the auxiliary parts delivery algorithm view.
Fig. 21 is the parts receipt algorithm view.
Fig. 22 is the finished products assembly algorithm view.
Fig. 23 is the main business procedure process view.
Fig. 24 is the business configuration process view.
Fig. 25 is the business operation process view.
Fig. 26 is the internal order process view.
Fig. 27 is the sales shipment process view.
Fig. 28 is the sales order process view.
Fig. 29 is the production planning process view.
Fig. 30 is the production implementation process view.
Fig. 31 is the products delivery process view.
Fig. 32 is the business operation loop transfer view.
Fig. 33 is the serial number reset assignment transfer view.
Fig. 34 is the production instance creation transfer view.
Fig. 35 is the production configuration traversal process view.
Fig. 36 is the production serial number increment transfer view.
Fig. 37 is the production serial number assignment transfer view.
Fig. 38 is the purchase instance creation transfer view.
Fig. 39 is the purchase configuration traversal transfer view.
Fig. 40 is the purchase serial number increment transfer view.
Fig. 41 is the purchase serial number assignment transfer view.
Fig. 42 is the sales serial number reset assignment transfer view.
Fig. 43 is the sales instance creation transfer view.
Fig. 44 is the sales configuration traversal transfer view.
Fig. 45 is the sales serial number increment transfer view.
Fig. 46 is the sales serial number assignment transfer view.
Fig. 47 is the sales-production configuration traversals transfer view.
Fig. 48 is the sales-production configuration comparison transfer view.
Fig. 49 is the sales-production configuration condition transfer view.
Fig. 50 is the sales-production assignment transfer view.
Fig. 51 is the sales-purchase configuration transfer view.
Fig. 52 is the sales-purchase configuration comparison transfer view.
Fig. 53 is the sales-purchase configuration condition transfer view.
Fig. 54 is the sales-purchase configuration transfer view.
Fig. 55 is the production operation traversal transfer view.
Fig. 56 is the purchase operation traversal transfer view.
Fig. 57 is the sales operation traversal transfer view.
Fig. 58 is the sales production operation traversal transfer view.
Fig. 59 is the sales-production operation comparison transfer view.
Fig. 60 is the sales-production operation condition transfer view.
Fig. 61 is the production-sales receipt transfer view.
Fig. 62 is the production internal order transfer view.
Fig. 63 is the sales-purchase traversal transfer view.
Fig. 64 is the sales-purchase operation comparison transfer view.
Fig. 65 is the sales-purchase operation condition transfer view.
Fig. 66 is purchase-sales receipt transfer view.
Fig. 67 is the purchase internal order transfer view.
Fig. 68 is the contract summary transfer view.
Fig. 69 is the demand summary transfer view.
Fig. 70 is the order summary transfer view.
Fig. 71 is the shipment summary transfer view.
Fig. 72 is the inventory summary transfer view.
Fig. 73 is the receipt summary transfer view.
Fig. 74 is the main parts pending processing summary transfer view.
Fig. 75 is the auxiliary parts pending processing summary transfer view.
Fig. 76 is the parts receipt transfer view.
Fig. 77 is the finished products assembly transfer view.
Fig. 78 is the processed delivery transfer view.
Fig. 79 is the total delivery quantity summary transfer view.

### DETAILED DESCRIPTION OF THE INVENTION

Generally, a computer comprises a central processor, a memory, an Input and Output (I/O) interface, and a bus; and furthermore, the computer is connected with an input and output device and a storage medium. The central processor takes charge of functions of computing and controlling the computer. The central processor may only include one central processing unit, or may include a plurality of central processing units distributed at one or more positions.

The memory medium may be formed by any known computer readable storage medium. For example, a buffer memory may temporarily store some program codes so as to reduce time for extracting codes from a large-capacity memory when the program is run. In the meantime, the memory may reside at a certain physical position, and may be stored in one or more types of data, or may be distributed in different physical systems in different forms. Moreover, the memory may also be distributed in a Local Area Network (LAN) or a Wide Area Network (WAN). The memory may contain program codes for implementing a general modeling method to establish a system view based on a system element view, or may contain other codes not shown in the diagram, such as an operating system.

The input and output interface allows the computer to exchange information with the storage medium or another computer. The input and output device contains any known external device type, such as a display device, a keyboard, a mouse, a printer, a sound box, a handheld device, and a facial mask, etc. The bus provides communication connection among respective component parts inside the computer, including a variety of transmission connection forms such as electrical, optical, wireless and other forms. The storage medium includes any known computer readable storage medium, such as a magnetic disc, an optical disc, etc. The storage medium may contain one or more examples of a general system view established by the system element view.

A person skilled in the art can know that the present invention can be implemented as an all hardware product, an all software product, or a combination of hardware and software, which is commonly referred to as a module. Moreover, the present invention can be implemented by a computer program product stored in the computer readable medium. The computer readable medium may be, for example, but not limited to an electrical, a magnetic, an optical, an electromagnetic, an infrared or a semiconductor system, apparatus, or device or any combination of the above, and more particularly, the computer readable medium includes, but not limited to, the following: a random access memory (RAM), a read-only memory (ROM), an erasable and programmable read-only memory (EPROM or flash memory), a CD-ROM, an optical storage device, a magnetic storage device, and any combination of the above.

The computer program codes for implementing the method of the present invention can be programmed by one or more programming languages, including, for example, Java, Small, C++, C# and so on, and other process-oriented programming languages such as C. The program codes can be run on a personal computer, a handheld device, or an LAN or WAN.

A person skilled in the art surely knows that the method of the present invention may also be expressed by graphical representations, and such graphical representations all can be implemented as computer program codes, which can be processed by a general-purpose computer, a special-purpose computer and other programmable data processing apparatuses, to achieve the functions indicated by these graphical representations.

Below, a further detailed description of the present invention will be given in conjunction with the accompanying drawings and a specific embodiment, wherein the embodiment is related to constructing a business management YWGL view. It should be noted that this embodiment is merely an example of a specific application of the present invention and the technical essence of the present invention is not limited to these two examples.

### Embodiment: constructing the business management YWGL view

This embodiment has supposed that the firm's business mode is to profit from selling its own products and outsourcing products and the present embodiment will model the business management system for achieving the following business management intentions:
(1) clearly distinguishing three modules: production management, purchase management, and sales management;
(2) configuration: configure the number of sales product types from number of production product types and number of purchase product types; and
(3) execution function: the sales management module monitors contract order quantities and shipment quantities of the direct sales and distributive sales of each type of products, receives delivery information from the production management module and the purchase management module, and issues order information to the production management module and the purchase management module based on the sales status; the production management module and the purchase management module receive order information from the sales management module, start an internal process, and submit the delivery information to the sales management module.

The detailed process for constructing this embodiment's system view is given below.

### Constructing the hierarchy view

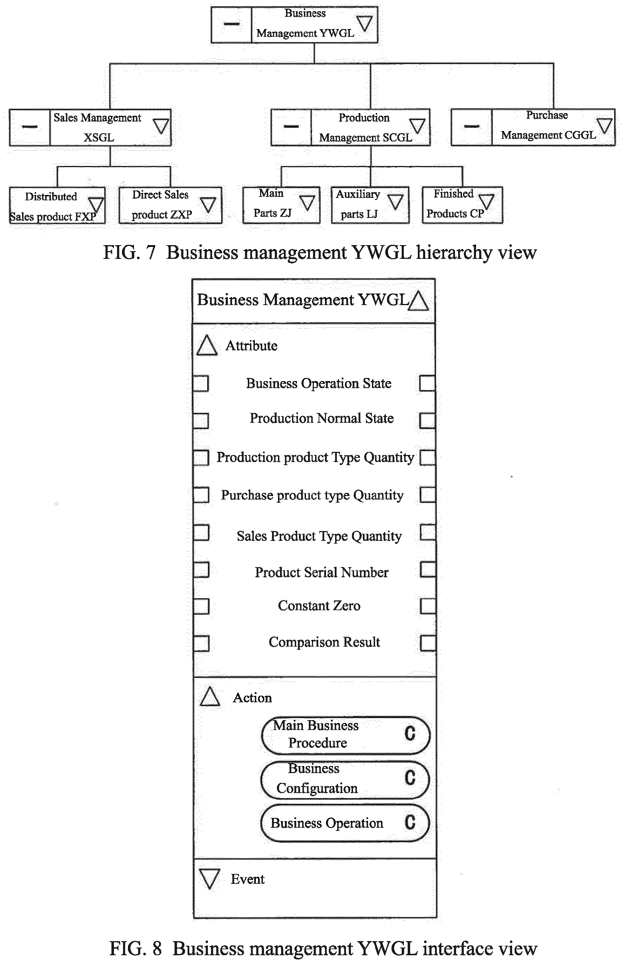

Fig. 7 shows the completed business management YWGL hierarchy view. The detailed process for constructing this hierarchy view to this embodiment is given below:
at the initial state before start of modeling, the hierarchy graph creates a default component class symbol as the root node of a hierarchy tree for the business management YWGL view, wherein the component class symbol in the root node is referred to as a root component class symbol;
the hierarchy graph receives command to select root component class symbol from an actual system modeling environment and sets the root component class symbol as the involved component class symbol in response to the foregoing command; the hierarchy graph receives command to modify component class symbol's name attribute to "business management YWGL" from the actual system modeling environment and modifies the name of the root component class symbol to "business management YWGL" in response to the foregoing command; the involved component class symbol is referred to as a business management YWGL component class symbol in accordance with the name of the root component class symbol and names for the other component class symbols may be deduced by analogy; the hierarchy graph receives command to set the component instance number to 1 from the actual system modeling environment and sets the component instance number of the business management YWGL component class symbol to 1 in response to the foregoing command;
the hierarchy graph receives and responds to command, from the actual system modeling environment, to add a child component class symbol for business management YWGL component class symbol; the hierarchy graph sets the foregoing child component class symbols as the involved component class symbol; the hierarchy graph receives and responds to commands from the actual system modeling environment, modifies the name of the involved component class symbol to "sales management XSGL" and sets the component instance number of the sales management XSGL component class symbol to 1;
in the foregoing steps, hierarchy graph adds two child component class symbols, production management SCGL component class symbol and procurement management CGGL component class symbol to business management YWGL component class symbol, and sets both of child component class symbols' component instance number to 0;
in the foregoing steps, hierarchy graph adds two child component class symbols, distributive sales product FXP component class symbol and direct sales product ZXP component class symbol to sales management XSGL component class symbol, both of the component instance number are 1; and
in the foregoing steps, hierarchy graph adds child component class symbols: main parts ZJ component class symbol, auxiliary parts LJ component class symbol, and finished products CP component class symbol, whose component instance number are 1 to the production management SCGL component class symbol.

So far, the hierarchy view of the present embodiment is accomplished.

### Constructing the interface views

Next, the processes for constructing the interface view for each of the component class symbols in the hierarchy view will be given.

### Business management YWGL interface view

Fig. 8 shows a completed interface view for business management YWGL component class symbol, which is shortly referred to as a business management YWGL interface view in accordance with the name of the component class symbol, names of other interface views may be deduced by analogy. The processes for constructing business management YWGL interface view are as follows:
the hierarchy graph receives and responds to command from the actual system modeling environment and sets business management YWGL component class symbol to the involved component class symbol;
the interface graph receives and responds to command from the actual system modeling environment by executing the following corresponding operations: adding a new attribute symbol for business management YWGL interface view; setting the foregoing new attribute symbol as the involved attribute symbol; modifying the data type of the involved attribute symbol to "bool"; modifying the attribute symbol name of the involved attribute symbol to business operation state, wherein such attribute symbol name for the business operation state is referred to business operation state attribute symbol, and names for the subsequent attribute symbols may be deduced by analogy, which will not be repeated below; and setting the attribute value of the business operation state attribute symbol to "true";
in the foregoing steps, adding the following attributes to the business management YWGL interface view: a production normal state attribute symbol whose data type is "bool" and the attribute value is "true"; a production product type quantity attribute symbol whose data type is "int" and attribute value is "3"; a purchase product type quantity attribute symbol whose data type is "int" and attribute value is "2"; a sales product type quantity attribute symbol whose data type is "int" and attribute value is "0"; a product serial number attribute symbol whose data type is "int" and attribute value is "0"; a constant zero attribute symbol whose data type is "int" and attribute value is "0"; and a comparison result attribute symbol whose data type is "bool" and the attribute value is "true";
the interface graph receives and responds to commands from the actual system modeling environment to execute the following corresponding operations: adding a process function symbol for business management YWGL interface view; setting the foregoing function symbol as the involved function symbol; modifying the name of the involved function symbol to "main business procedure", wherein such a function symbol is shortly referred to as a main business procedure function symbol, names for the subsequent function symbols may be deduced by analogy and will not be repeated below; and
in the foregoing steps, adding the process function symbols such as business configuration function symbol and business operation function symbol for business management YWGL interface view.

So far, the business management YWGL interface view is accomplished.

### Sales management XSGL interface view

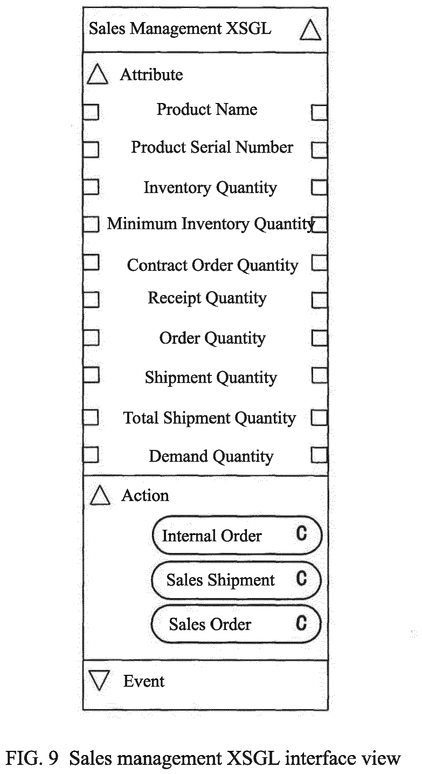

Fig. 9 shows a completed sales management XSGL interface view whose construction process is similar to that of the "business management YWGL interface view" and the content thereof is as follows:
the set of the attribute symbols contains: a product name attribute symbol whose data type is "string" and attribute value is "sales product"; a product serial number attribute symbol whose data type is "int" and attribute value is "1"; an inventory quantity attribute symbol whose data type is "int"and attribute value is "0"; a minimum inventory quantity attribute symbol whose data type is "int" and attribute value is "0"; a contract order quantity attribute symbol whose data type is "int" and attribute value is "0"; a receipt quantity attribute symbol whose data type is "int" and attribute value is "0"; an order quantity attribute symbol whose data type is "int" and attribute value is "0"; a shipment quantity attribute symbol whose data type is "int" and attribute value is "0"; a total shipment quantity attribute symbol whose data type is "int" and attribute value is "0"; and a demand quantity attribute symbol whose data type is "int" and attribute value is "0"; and
the set of function symbols contains three process function symbols: internal order function symbol, sales shipment function symbol, and sales order function symbol.

### Production management SCGL interface view

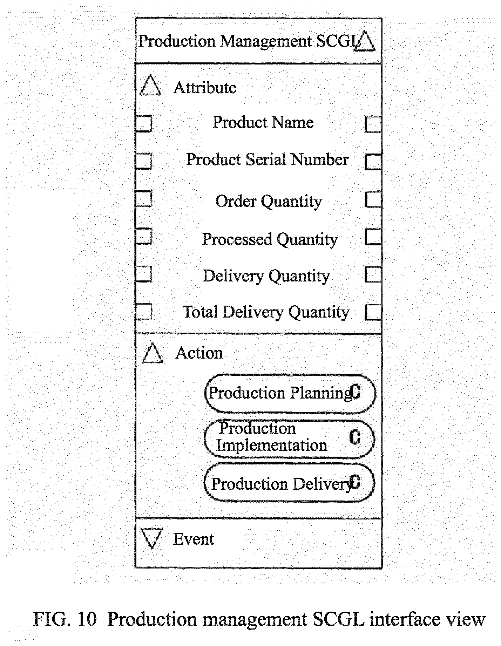

Fig. 10 shows a completed production management SCGL interface view whose construction process is similar to that of "business management YWGL interface view" and the content thereof is as follows:
the set of the attribute symbols contains: a product name attribute symbol whose data type is "string" and attribute value is "self-developed product"; a product serial number attribute symbol whose data type is "int" and attribute value is "1"; an order quantity attribute symbol whose data type is "int" and attribute value is "0"; a processed quantity attribute symbol whose data type is "int" and attribute value is "0"; a delivery quantity attribute symbol whose data type is "int" and attribute value is "0"; and a total delivery quantity attribute symbol whose data type is "int"and attribute value is "0"; and
the set of function symbols contains three process function symbols: production planning function symbol, production implementation function symbol, and production delivery function symbol.

### Purchase management CGGL interface view

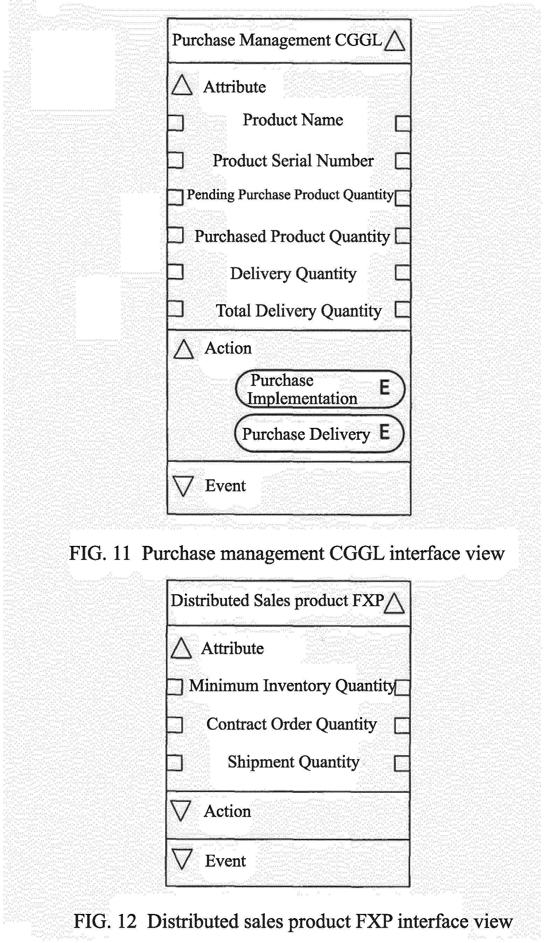

Fig. 11 shows a completed purchase management CGGL interface view whose construction process is similar to that of "business management YWGL interface view" and the content thereof is as follows:
the set of the attribute symbols contains: a product name attribute symbol whose data type is "string" and attribute value is "purchased product"; a product serial number attribute symbol whose data type is "int" and attribute value is "1"; a pending purchase product quantity attribute symbol whose data type is "int" and attribute value is "0"; a purchased product quantity attribute symbol whose data type is "int" and attribute value is "0"; a delivery quantity attribute symbol whose data type is "int" and attribute value is 0; and a total delivery quantity attribute symbol whose data type is "int" and attribute value is "0" the; and
the set of function symbols contains two algorithms function symbols, i.e., purchase implementation function symbol and purchase delivery function symbol.

### Distributed sales product FXP interface view

Fig. 12 shows a completed distributed sales product FXP interface view whose construction process is similar to that of "business management YWGL interface view" and the content thereof is as follows:
the set of the attribute symbols contains: a minimum inventory quantity attribute symbol whose data type is "int" and attribute value is "5"; a contract order quantity attribute symbol whose data type is "int" and attribute value is "12"; and a shipment quantity attribute symbol whose data type is "int" and attribute value is "8".

### Direct sales product ZXP interface view

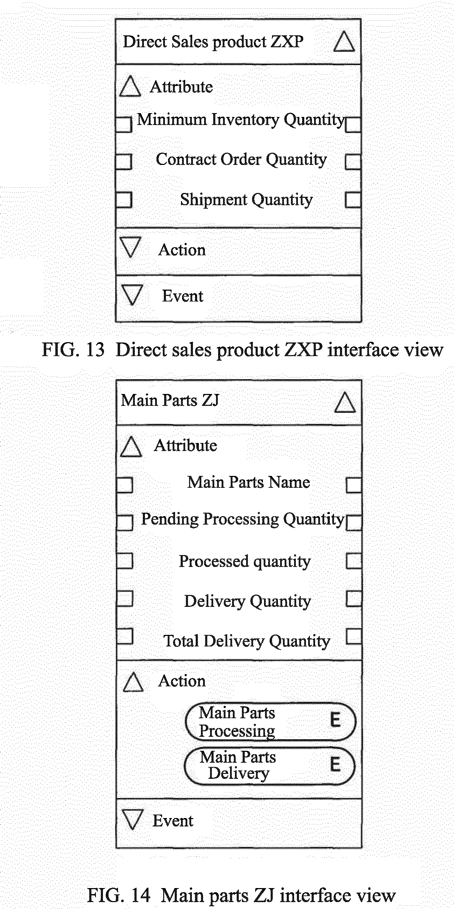

Fig. 13 shows a completed direct sales product ZXP interface view whose construction process is similar to that of "business management YWGL interface view" and the content thereof is as follows:
the set of the attribute symbols contains: a minimum inventory quantity attribute symbol whose data type is "int" and attribute value is "6"; a contract order quantity attribute symbol whose data type is "int" and attribute value is "3"; and a shipment quantity attribute symbol whose data type is "int" and attribute value is "4".

### Main parts ZJ interface view

Fig. 14 shows a completed main parts ZJ interface view whose construction process is similar to that of "business management YWGL interface view" and the content thereof is as follows:
the set of the attribute symbols contains: a main parts name attribute symbol whose data type is "string" and attribute value is "main parts"; a pending processing quantity attribute symbol whose data type is "int"and attribute value is "0"; a processed quantity attribute symbol whose data type is "int"and attribute value is "0"; a delivery quantity attribute symbol whose data type is "int"and attribute value is "0"; and a total delivery quantity attribute symbol whose data type is "int" and attribute value is "0"; and
the set of function symbols contains two algorithm function symbols: main parts processing function symbol and main parts delivery function symbol.

### Auxiliary parts LJ interface view

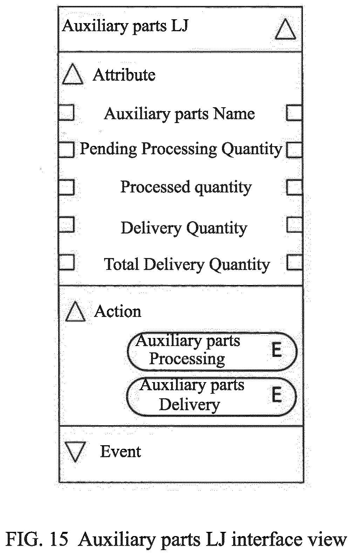

Fig. 15 shows a processed auxiliary parts LJ interface view whose construction process is similar to that of "business management YWGL interface view" and the content thereof is as follows:
the set of the attribute symbols contains: an auxiliary parts name attribute symbol whose data type is "string" and attribute value is "auxiliary parts"; a pending processing quantity attribute symbol whose data type is "int"and attribute value is "0"; a processed quantity whose data type is "int" and attribute value is "0"; a delivery quantity attribute symbol whose data type is "int" and attribute value is "0"; and a total delivery quantity attribute symbol whose data type is "int" and attribute value is "0"; and
the set of function symbols contains two algorithm function symbols: auxiliary parts processing function symbol and auxiliary parts delivery function symbol.

### Finished products CP interface view

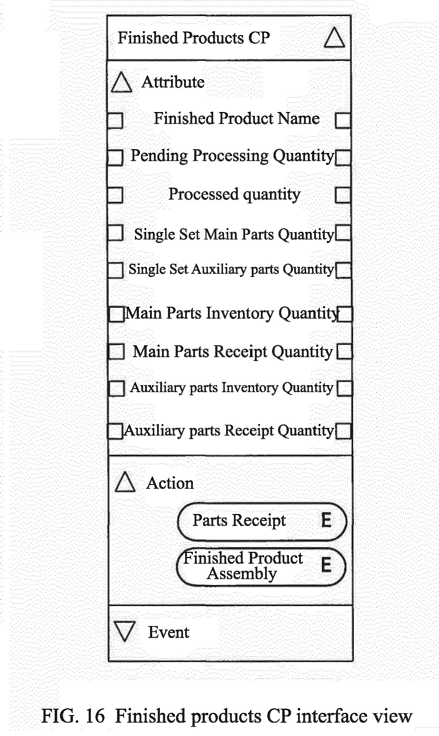

Fig. 16 shows a completed finished products CP interface view whose construction process is similar that of "business management YWGL interface view" and the content thereof is as follows:
the set of the attribute symbols contains: a finished product name attribute symbol whose data type is "string" and attribute value is "finished product"; a pending processing quantity attribute symbol whose data type is "int" and attribute value is "0", a processed quantity attribute symbol whose data type is "int"and attribute value is "0"; a single set main parts quantity attribute symbol whose data type is "int" and attribute value is "2"; a single set auxiliary parts quantity attribute symbol whose data type is "int"and attribute value is "6"; a main parts inventory quantity attribute symbol whose data type is "int" and attribute value is "0"; a main parts receipt quantity attribute symbol whose data type is "int" and attribute value is "0";an parts inventory quantity attribute symbol whose data type is "int" and attribute value is "0"; and a parts receipt quantity attribute symbol whose data type is "int" and attribute value is "0"; and
the set of function symbols contains two algorithm function symbols: parts receipt function symbol and finished product assembly function symbol.

### Constructing the algorithm views

Next, the construction process of each of the algorithm views will be described in detail.

### Main parts processing algorithm view

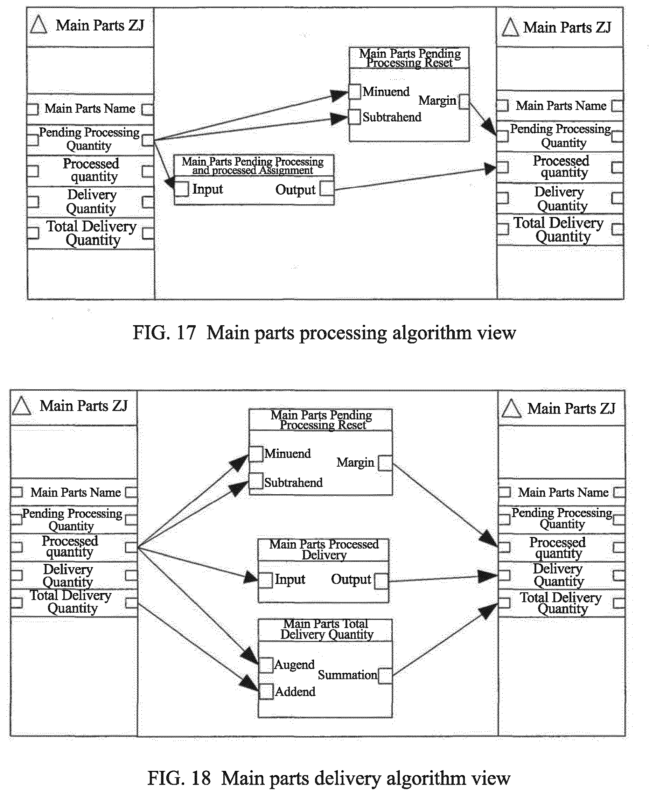

Fig. 17 shows a completed main parts processing algorithm view whose construction process is as follows:
the hierarchy graph receives and responds to command from the actual system modeling environment to set main parts ZJ component class symbol as the involved component class symbol;
the interface graph receives and responds to command from the actual system modeling environment to set the main parts processing function symbol as the involved function symbol, wherein the algorithm view for accomplishing the main parts processing function symbol is shortly referred to main parts processing algorithm view in accordance with the function symbol name; names of the subsequent algorithm views for other function symbols may be deduced by analogy, which will not be repeated below;
the algorithm graph receives and responds to commands from the actual system modeling environment by executing the following corresponding operations: adding an assignment operator symbol which is referred to as an main parts pending processing and processed assignment operator symbol; establishing an assignment symbol from the pending processing quantity attribute symbol of the main parts ZJ component class symbol to the input attribute symbol of the main parts pending processing and processed assignment operator symbol; establishing an assignment symbol from the output attribute symbol of the main parts pending processing and processed assignment operator symbol to the processed quantity attribute symbol of the main parts ZJ component class symbol; and
in the foregoing steps, adding a subtraction operator symbol which is referred to as a main parts pending processing reset operator symbol; establishing an assignment symbol from the pending processing quantity attribute symbol of the main parts ZJ component class symbol to the minuend attribute symbol of the main parts pending processing reset operator symbol; establishing an assignment symbol from the pending processing quantity attribute symbol of the main parts ZJ component class symbol to the subtrahend attribute symbol of the main parts pending processing reset operator symbol; and establishing an assignment symbol from the margin attribute symbol of the main parts pending processing reset operator symbol to the pending processing quantity attribute symbol of the main parts ZJ component class symbol.

So far, the main parts processing algorithm view is accomplished.

### Main parts delivery algorithm view

Fig. 18 shows a completed main parts delivery algorithm view whose construction process is similar to that of "main parts processing algorithm view" and the content thereof is as follows:
an assignment operator symbol which is referred to as a main parts processed delivery operator symbol has the following assignments: from the processed quantity attribute symbol of the main parts ZJ component class symbol to the input attribute symbol of the main parts processed delivery operator symbol; and from the output attribute symbol of the main parts processed delivery operator symbol to the delivery quantity attribute symbol of the main parts ZJ component class symbol;
an addition operator symbol which is referred to as a main parts total delivery quantity operator symbol has the following assignments: from the processed quantity attribute symbol of the main parts ZJ component class symbol to the augend attribute symbol of the main parts total delivery quantity operator symbol; from the total delivery quantity attribute symbols of main parts ZJ component class symbol to the addend attribute symbol of the main parts total delivery quantity operator symbol; and from the summation attribute symbol of the main parts total delivery quantity operator symbol to the total delivery quantity attribute symbol of the main parts ZJ component class symbol; and
a subtraction operator symbol which is referred to as a main parts processed reset operator symbol has the following assignments: from the processed quantity attribute symbol of the main parts ZJ component class symbol to the minuend attribute symbol of the main parts processed reset operator symbol ; from the processed quantity attribute symbol of the main parts ZJ component class symbol to the subtrahend attribute symbol of the main parts processed reset operator symbol ; and from the margin attribute symbol of the main parts processed reset operator symbol to the processed quantity attribute symbol of the main parts ZJ component class symbol.

### Auxiliary parts processing algorithm view

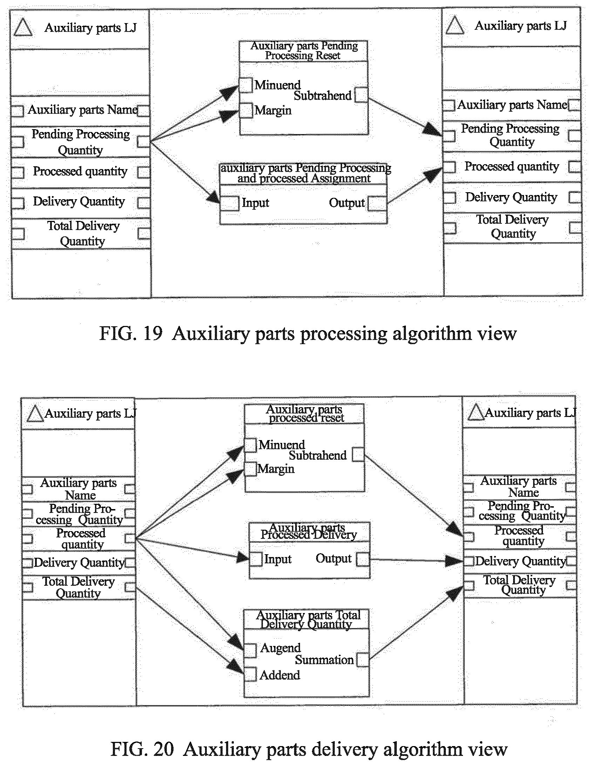

Fig. 19 shows a processed auxiliary parts processing algorithm view whose construction process is similar to "that of main parts processing algorithm view" and the content thereof is as follows:
an assignment operator symbol which is referred to as an auxiliary parts pending processing and processed assignment operator symbol has the following assignments: from the pending processing quantity attribute symbol of the auxiliary parts LJ component class symbol to the input attribute symbol of the auxiliary parts pending processing and processed assignment operator symbol; and from the output attribute symbol of the auxiliary parts pending processing and processed assignment operator symbol to the pending processing quantity attribute symbol of the auxiliary parts LJ component class symbol;
a subtraction operator symbol which is referred to as an auxiliary parts pending processing reset operator symbol has the following assignments: from the pending processing quantity attribute symbol of the auxiliary parts LJ component class symbol to the minuend attribute symbol of the auxiliary parts pending processing reset operator symbol; from the pending processing quantity attribute symbol of the auxiliary parts LJ component class symbol to the subtrahend attribute symbol of the auxiliary parts pending processing reset operator symbol; and from the margin attribute symbol of the auxiliary parts pending processing reset operator symbol to the pending processing quantity attribute symbol of the auxiliary parts LJ component class symbol.

### Auxiliary parts delivery algorithm view

Fig. 20 shows a processed auxiliary parts delivery algorithm view whose construction process is similar to that of "main parts processing algorithm view" and the content thereof is as follows:
an assignment operator symbol which is referred to as an auxiliary parts processed delivery operator symbol has the following assignments: from the processed quantity attribute symbol of the auxiliary parts LJ component class symbol to the input attribute symbol of the auxiliary parts processed delivery operator symbol; and from the output attribute symbol of the auxiliary parts processed delivery operator symbol to the delivery quantity attribute symbol of the auxiliary parts LJ component class symbol;
an addition operator symbol which is referred to as an auxiliary parts total delivery quantity operator symbol has the following assignments: from the processed quantity attribute symbol of the auxiliary parts LJ component class symbol to the augend attribute symbol of the auxiliary parts total delivery quantity operator symbol; from the total delivery quantity attribute symbols of auxiliary parts LJ component class symbol to the addend attribute symbol of the auxiliary parts total delivery quantity operator symbol; and from the summation attribute symbol of the auxiliary parts total delivery quantity operator symbol to the total delivery quantity attribute symbol of the auxiliary parts LJ component class symbol; and
a subtraction operator symbol which is referred to as an auxiliary parts processed reset operator symbol has the following assignments: from the processed quantity attribute symbol of the auxiliary parts LJ component class symbol to the minuend attribute symbol of the auxiliary parts processed reset operator symbol; from the processed quantity attribute symbol of the auxiliary parts LJ component class symbol to the subtrahend attribute symbol of the auxiliary parts processed reset operator symbol; and from the margin attribute symbol of the auxiliary parts processed reset operator symbol to the processed quantity attribute symbol of the auxiliary parts LJ component class symbol.

### Parts receipt algorithm view

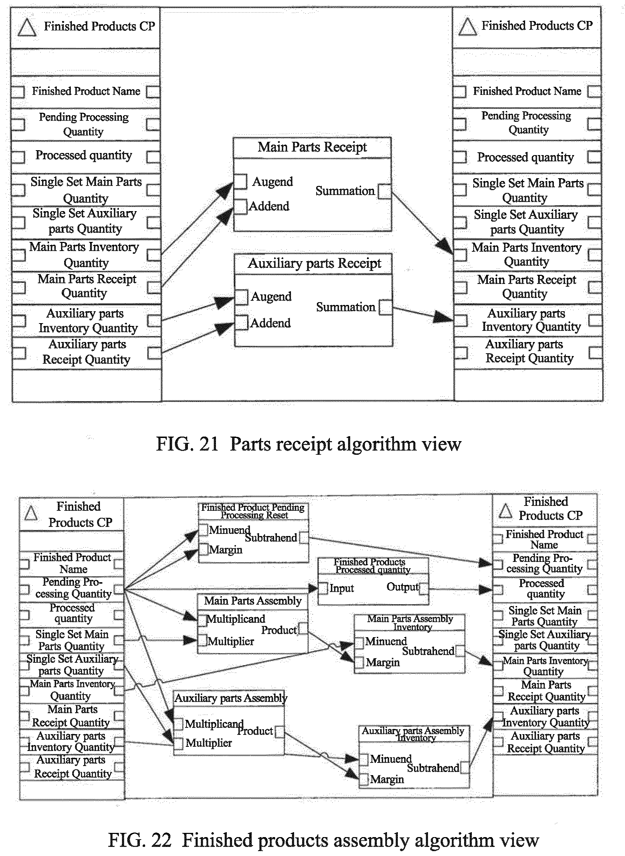

Fig. 21 shows a completed parts receipt algorithm view whose construction process is similar to that of "main parts processing algorithm view" and the content thereof is as follows:
an addition operator symbol which is referred to as a main parts receipt operator symbol has the following assignments: from the main parts inventory quantity attribute symbol of the finished products CP component class symbol to the augend attribute symbol of the main parts receipt operator symbol; from the main parts receipt quantity attribute symbol of the finished products CP component class symbol to the addend attribute symbol of the main parts receipt operator symbol; and from the sum attribute symbol of the main parts receipt operator symbol to the main parts inventory quantity attribute symbol of the finished products CP component class symbol;
an addition operator symbol which is referred to as an auxiliary parts receipt operator symbol has the following assignments: from the auxiliary parts inventory quantity attribute symbol of the finished products CP component class symbol to the augend attribute symbol of the auxiliary parts receipt operator symbol; from the auxiliary parts receipt quantity attribute symbol of the finished products CP component class symbol to the addend attribute symbol of the auxiliary parts receipt operator symbol; and from the sum attribute symbol of the auxiliary parts receipt operator symbol to the auxiliary parts inventory quantity attribute symbol of the finished products CP component class symbol.

### Finished product assembly algorithm view

Fig. 22 shows a completed finished product assembly algorithm view whose construction process is similar to that of the " main parts processing algorithm view " and the content thereof is as follows:
a multiplication operator symbol which is referred to as a main parts assembly operator symbol has the following assignments: from the finished products CP component class symbol's pending processing quantity attribute symbol to the multiplicand attribute symbol of the main parts assembly operator symbol; and from the single set main parts quantity attribute symbol of the finished products CP component class symbol to the multiplier attribute symbol of the main parts assembly operator symbol;
a subtraction operator symbol which is referred to as a main parts assembly inventory operator symbol has the following assignments: from the main parts inventory quantity attribute symbol of the finished products CP component class symbol to the minuend attribute symbol of the main parts assembly inventory operator symbol; from the product attribute symbol of the main parts assembly inventory operator symbol to the subtrahend attribute symbol of the main parts assembly inventory operator symbol; and from the margin attribute symbol of the main parts assembly inventory operator symbol to the main parts inventory quantity attribute symbol of the finished products CP component class symbol;
a multiplication operator symbol which is referred to as an auxiliary-parts assembly operator symbol has the following assignments: from the pending processing quantity attribute symbol of the finished products CP component class symbol to the multiplicand attribute symbol of the auxiliary parts assembly operator symbol; and the single set auxiliary parts quantity attribute symbol of the finished products CP component class symbol to the multiplier attribute symbol of the auxiliary parts assembly operator symbol;
a subtraction operator symbol which is referred to as an auxiliary parts assembly inventory operator symbol has the following assignments: from the auxiliary parts inventory quantity attribute symbol of the finished products CP component class symbol to the minuend attribute symbol of the auxiliary parts assembly inventory operator symbol; and from the product attribute symbol of the auxiliary-parts assembly inventory operator symbol to the subtrahend attribute symbol of the auxiliary parts assembly inventory operator symbol; and from the margin attribute symbol of the auxiliary parts assembly inventory operator symbol to the auxiliary parts inventory quantity attribute symbol of the finished products CP component class symbol;
an assignment operator symbol which is referred to as a finished product processed operator symbol has the following assignments: from the pending processing quantity attribute symbol of the finished products CP component class symbol to the input attribute symbol of the finished product processed operator symbol; and from the output attribute symbol of the finished product processed operator symbol to the finished products CP component class symbol's processed quantity attribute symbol;
a subtraction operator symbol which is referred to as a finished product pending processing reset operator symbol has the following assignments: from the finished products CP component class symbol's pending processing quantity attribute symbol to the minuend attribute symbol of the finished product pending processing reset operator symbol; from the pending processing quantity attribute symbol of the finished products CP component class symbol to the subtrahend attribute symbol of the finished product pending processing reset operator symbol; and from the margin attribute symbol of the finished product pending processing reset operator symbol to the pending processing quantity attribute symbol of the finished products CP component class symbol.

So far, all algorithms views in this embodiment are accomplished.

### Constructing the process views

Next, the construction process of each process view will be described in detail.

### Main business procedure process view

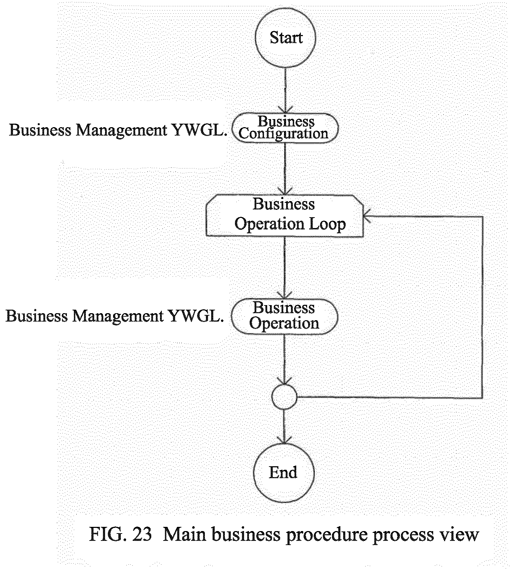

Fig. 23 shows a completed main business procedure process view for the business management YWGL component class symbol. It is constructed as follows:
the hierarchy graph receives and responds to command from the actual system modeling environment to set the business management YWGL component class symbol as the involved component class symbol;
the interface graph receives and responds to the command from the actual system modeling environment to set the main business procedure function symbol as the involved function symbol, wherein the process view of the main business procedure function symbol is shortly referred to as a main business procedure process view in accordance with the function symbol name and names of process views for the other function symbols may be deduced by analogy, which will not be repeated below;
the process graph first creates a sequential action symbol as the root action symbol for the main business procedure process view, wherein the sequential action symbol is a logic action symbol with sequential execution function symbol, has a start node and an end node, and may sequentially add other action symbols between the start node and the end node, and wherein the root action symbol is referred to as a main business procedure root action symbol in accordance with the name of the process view; it should be noted that the process graph creates a root action symbol for each process view, of which the name of the root action symbol may be deduced by analogy and will not be repeated below;
the process graph receives a command from the actual system modeling environment to add an action symbol based on a business configuration function symbol of the business management YWGL component class symbol, the action symbol is shortly referred to as a business configuration action symbol in accordance with the name of function symbol executed by the action symbol, and names for subsequent action symbols may be deduced by analogy, which will not be repeated below; and the process graph adds a business configuration action symbol in the main business procedure root action symbol in response to the foregoing command;
in the foregoing steps, in the main business procedure root action symbol, add a loop action symbol, which is shortly referred to as a business operation loop action symbol, is an operator action symbol with a loop function symbol, and comprises a loop sequence inside, wherein the loop sequence consists of a plurality of nodes that contain action symbols;
in the foregoing steps, add an action symbol based on the business management YWGL component class symbol's business operation function symbol in the business operation loop action symbol's loop sequence, wherein such action symbol is shortly referred to as a business operation action symbol.

So far, the main business procedure process view is accomplished.

### Business configuration process view

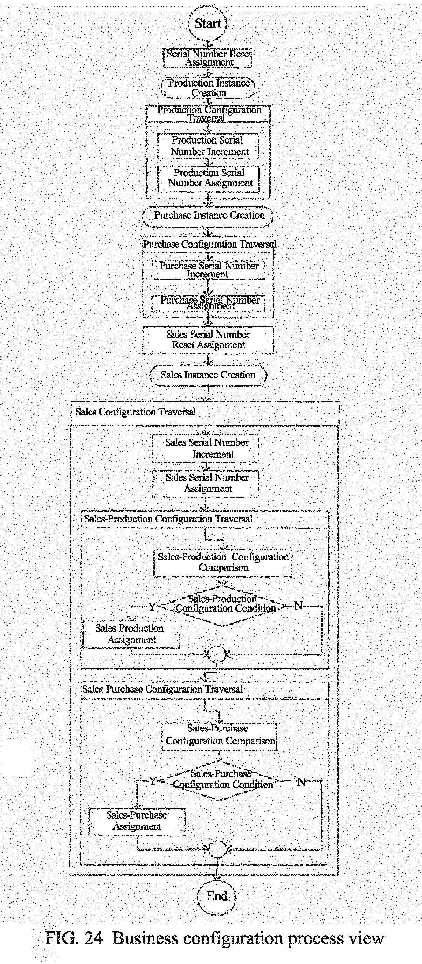

Fig. 24 shows a completed business configuration process view for the business management YWGL component class symbol whose construction process is similar to that of the "main business procedure process view" and the content thereof is as follows:
add an assignment operator action symbol, shortly referred to as a serial number reset assignment action symbol, in the business configuration root action symbol; wherein the assignment operator action symbol is an operator action symbol with an assignment function symbol; add an instance creation operator action symbol, shortly referred to as a production instance creation action symbol, in the business configuration root action symbol, wherein the instance creation operator action symbol is an operator action symbol with component instance creation function symbols; add a traversal action symbol, shortly referred to as a production configuration traversal action symbol, in the business configuration root action symbol, wherein the traversal action symbol comprises of a node sequence, with each node accommodating one action symbol; and wherein the traversal action symbol refers to an operator action symbol where the node sequence is only executed once on each of component instances of a certain component class symbol;
add an increment action symbol, shortly referred to as a production serial number increment action symbol, in the production configuration traversal action symbol's traversal sequence, wherein the increment action symbol refers to an operator action symbol with a prefabricated function symbol that increments integers by one; add an assignment action symbol, shortly referred to as a production serial number assignment action symbol, in the production configuration traversal action symbol's traversal sequence;
add an instance creation operator action symbol, shortly referred to as a purchase instance creation action symbol, in the business configuration root action symbol; add a traversal action symbol, shortly referred to as a purchase configuration traversal action symbol, in the business configuration root action symbol;
add an increment action symbol, shortly referred to as a purchase serial number increment action symbol, in the purchase configuration traversal action symbol's traversal sequence; add an assignment action symbol, shortly referred to as a purchase serial number assignment action symbol, in the purchase configuration traversal action symbol's traversal sequence;
add an assignment operator action symbol, shortly referred to as a sales serial number reset assignment operator symbol, in the business configuration root action symbol; add an instance creation operator action symbol, shortly referred to as a sales instance creation action symbol in the business configuration root action symbol; add a traversal action symbol, shortly referred to as a sales configuration traversal action symbol, in the business configuration root action symbol;
add an increment action symbol, shortly referred to as a sales serial number increment action symbol, in the sales configuration traversal action symbol's traversal sequence; add an assignment action symbol, shortly referred to as a sales serial number assignment action symbol, in the sales configuration traversal action symbol's traversal sequence; add a traversal action symbol, shortly referred to as a sales-production configuration traversal action symbol, in the sales configuration traversal action symbol's traversal sequence;
add a consistency comparison action symbol, shortly referred to as a sales-production configuration comparison action symbol, in the sales-production configuration traversal action symbol's traversal sequence, wherein the consistency comparison action symbol is an operator action symbol with a prefabricated function symbol for comparing whether or not two inputs are consistent; add a condition action symbol shortly referred to as a sales-production configuration condition action symbol, in the sales-production configuration traversal action symbol's traversal sequence, wherein the condition action symbol is a logic action symbol with a prefabricated condition selection function symbol;
add an assignment action symbol, shortly referred to as a sales-production assignment action symbol, in the "true" branch of the sales-production configuration condition action symbol;
add an increment traversal action symbol, shortly referred to as a sales-purchase configuration traversal action symbol, in the sales configuration traversal action symbol's traversal sequence;
add a consistency comparison action symbol, shortly referred to as a sales-purchase configuration comparison action symbol, in the sales-purchase configuration traversal action symbol's traversal sequence; add a condition action symbol, shortly referred to as a sales-purchase configuration condition action symbol, in the sales-purchase configuration traversal action symbol's traversal sequence; and
add an assignment action symbol, shortly referred to as a sales-purchase assignment action symbol in the "true" branch of the sales-purchase configuration condition action symbol.

### Business operation process view

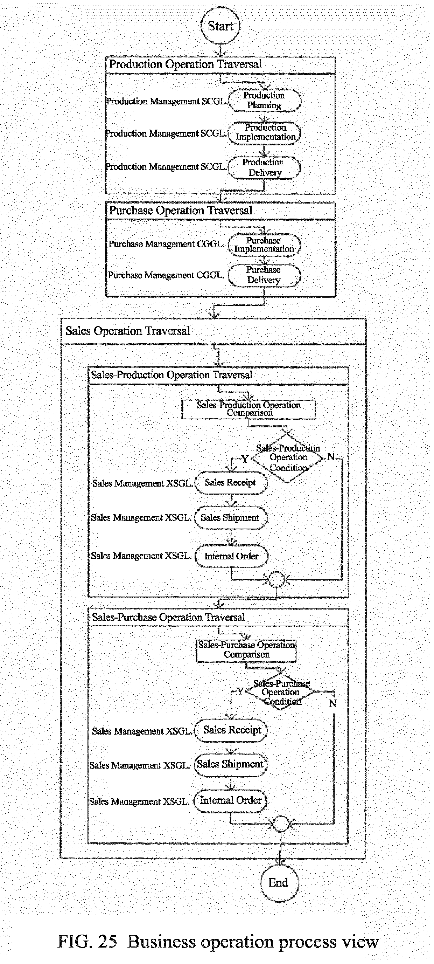

Fig. 25 shows a completed business operation process view for the business management YWGL component class symbol, whose construction process is similar to that of the "main business procedure process view" and the content thereof is as follows:
add a traversal action symbol, shortly referred to as a production operation traversal action symbol, in the business operation root action symbol;
add an action symbol based on the production management SCGL component class symbol's production planning function symbol, shortly referred to as a production planning action symbol, in the production operation traversal action symbol's traversal sequence; add an action symbol based on the production management SCGL component class symbol's production implementation function symbol, shortly referred to as a production implementation action symbol, in the production operation traversal action symbol's traversal sequence; add an action symbol based on production management SCGL component class symbol's production delivery function symbol, shortly referred to as a production delivery action symbol, in the production operation traversal action symbol's traversal sequence;
add a traversal action symbol, shortly referred to as a purchase operation traversal action symbol, in the business operation root action symbol;
add an action symbol based on the purchase management CGGL component class symbol's purchase implementation function symbol, shortly referred to as a purchase implementation action symbol, in the purchase operation traversal action symbol's traversal sequence; add an action symbol based on the purchase management CGGL component class symbol's purchase delivery function symbol, shortly referred to as a purchase delivery action symbol, in the purchase operation traversal action symbol's traversal sequence;
add a traversal action symbol, shortly referred to as a sales operation traversal action symbol, in the business operation root action symbol;
add a traversal action symbol, shortly referred to as a sales-production operation traversal action symbol, in the sales operation traversal action symbol's traversal sequence;
add a consistency comparison action symbol, shortly referred to as a sales-production operation comparison action symbol, in the sales-production operation traversal action symbol's traversal sequence; add a condition action symbol, shortly referred to as a sales-production operation condition action symbol, in the sales-production operation traversal action symbol's traversal sequence; and
add an action symbol based on the sales management XSGL component class symbol's sales receipt function symbol, shortly referred to as a production-sales receipt action symbol, in the "true" branch of the sales-production operation condition action symbol; add an action symbol based on the sales management XSGL component class symbol's sales shipment function symbol, shortly referred to as a production-sales shipment action symbol, in the "true" branch of the sales-production operation condition action symbol; add an action symbol based on the sales management XSGL component class symbol's sales internal order function symbol, shortly referred to as a production-sales internal order action symbol, in the "true" branch of the sales-production operation condition action symbol;
add a traversal action symbol, shortly referred to as a sales-purchase operation traversal action symbol, in the sales operation traversal action symbol's traversal sequence;
add a consistency comparison action symbol, shortly referred to as a sales-purchase operation comparison action symbol, in the sales-purchase operation traversal action symbol's traversal sequence; add a condition action symbol shortly referred to as a sales-purchase operation condition action symbol, in the sales operation traversal action symbol's traversal sequence;
add an action symbol based on the sales management XSGL component class symbol's sales receipt function symbol, shortly referred to as a purchase-sales receipt action symbol, in the "true" branch of the sales-purchase operation condition action symbol; add an action symbol based on the sales management XSGL component class symbol's sales shipment function symbol, shortly referred to as a purchase-sales shipment action symbol, in the "true" branch of the sales-purchase operation condition action symbol; add an action symbol based on the sales management XSGL component class symbol's sales internal order function symbol, shortly referred to as a purchase-sales internal order action symbol, in the "true" branch of the sales-purchase operation condition action.

### Internal order process view

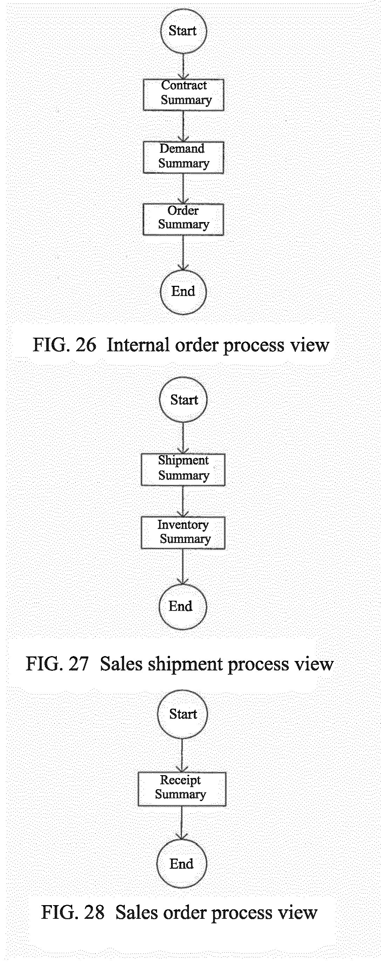

Fig. 26 shows a completed internal order process view for the sales management XSGL component class symbol whose construction process is similar to that of "main business procedure process view" and the content thereof is as follows:
add an addition action symbol, shortly referred to as a contract summary action symbol, in the internal order root action symbol, wherein the addition action symbol is an operator action symbol with an addition function symbol; add an addition action symbol, shortly referred to as a demand summary action symbol, in the internal order root action symbol; add a subtraction action symbol, shortly referred to as an order summary action symbol, in the internal order root action symbol, wherein the subtraction action symbol is an operator action symbol with subtraction function symbol.

### Sales shipment process view

Fig. 27 shows a completed sales shipment process view for the sales management XSGL component class symbol, whose construction process is similar to that of "main business procedure process view" and the content thereof is as follows:
add an addition action symbol, shortly referred to as a shipment summary action symbol, in the sales shipment root action symbol; add a subtraction action symbol, shortly referred to as an inventory summary action symbol, in the sales shipment root action symbol, wherein the subtraction action symbol is an operator action symbol with subtraction function symbol.

### Sales order process view

Fig. 28 shows a completed sales order process view for the sales management XSGL component class symbol whose construction process is similar to that of the "main business procedure process view" and the content thereof is as follows:
add an addition action symbol, shortly referred to as a receipt summary action symbol, in the sales receipt root action symbol.

### Production planning process view

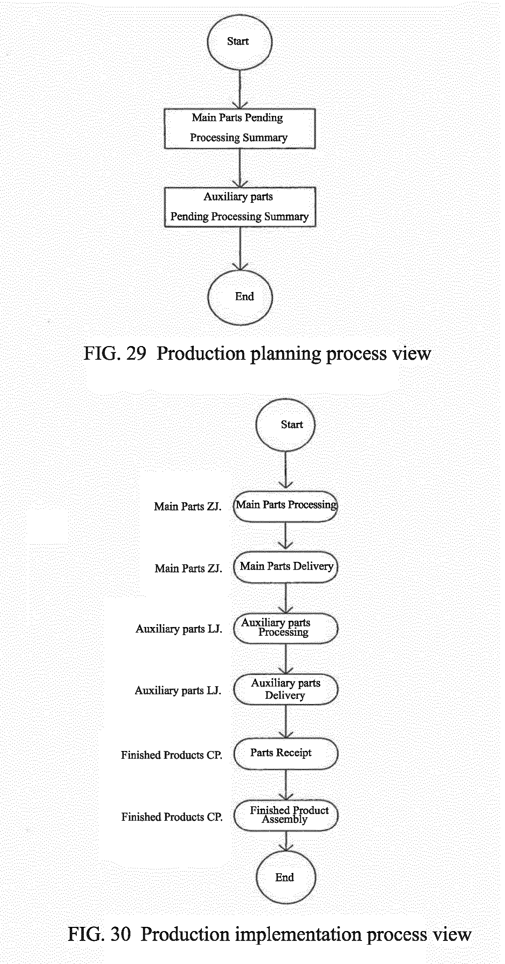

Fig. 29 shows a completed production planning process view for the production management SCGL component class symbol, whose construction process is similar to that of the "main business procedure process view " and the content thereof is as follows:
add a multiplication action symbol, shortly referred to as a main parts pending processing summary action symbol, in the production planning root action symbol, wherein the multiplication action symbol is an operator action symbol with multiplication function symbol; add another multiplication action symbol, shortly referred to as an auxiliary parts pending processing summary action symbol in the production planning root action symbol.

### Production implementation process view

Fig. 30 shows a completed production implementation process view for the production management SCGL component class symbol, whose construction process is similar to that of the "main business procedure process view" and the content thereof is as follows:
add an action symbol based on main parts ZJ component class symbol's main parts processing function symbol, referred to as a main parts processing action symbol, in the production implementation root action symbol; add an action symbol based on main parts ZJ component class symbol's main parts delivery function symbol, referred to as a main parts delivery action symbol, in the production implementation root action symbol; add an action symbol based on auxiliary parts LJ component class symbol's auxiliary parts processing function symbol, referred to as an auxiliary parts processing action symbol, in the production implementation root action symbol; add an action symbol based on auxiliary parts LJ component class symbol's auxiliary parts delivery function symbol, referred to as an auxiliary parts delivery action symbol, in the production implementation root action symbol; an action symbol based on finished products CP component class symbol's parts receipt function symbol, referred to as a parts receipt action symbol, in the production implementation root action symbol; add an action symbol based on finished products CP component class symbol's a finished product assembly function symbol, referred to as a finished product assembly action symbol, in the production implementation root action symbol.

### Production delivery process view

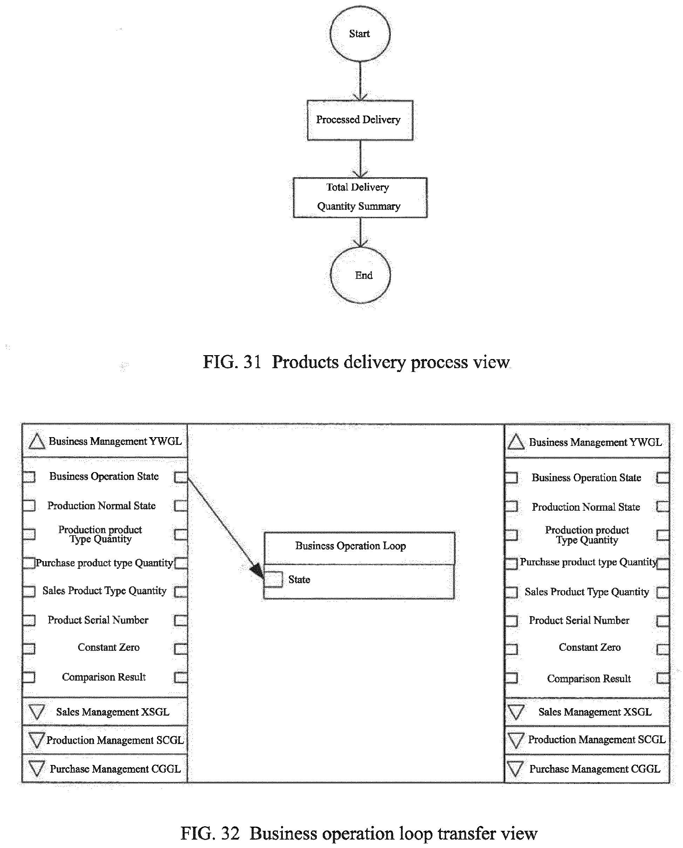

Fig. 31 shows a completed production delivery process view for the production management SCGL component class symbol, whose construction process is similar to that of the "main business procedure process view" and the content thereof is as follows:
add an assignment action symbol, shortly referred to as a completed product delivery action symbol, in the production delivery root action symbol; add an addition action symbol, shortly referred to as a total delivery quantity summary action symbol, in the production delivery root action symbol.

So far, all process views of this embodiment are accomplished.

### Constructing the transfer views

Next, the construction process of the transfer view for each action symbol will be described in detail.

### Business configuration transfer view

(null)

### Business operation loop transfer view

Fig. 32 shows a completed business operation loop transfer view whose construction process is as follows:
the hierarchy graph receives and responds to command from the actual system modeling environment to set the business management YWGL component class symbol as the involved component class symbol;
the interface graph receives and responds to command from the actual system modeling environment to set the main business procedure function symbol as the involved function symbol;
the process graph receives command from the actual system modeling environment to set the business operation loop action symbol as the involved action symbol; the transfer graph constructs a transfer view for the involved action symbol, yielding the transfer view for business operation loop action symbol; for simplicity, the transfer view for business operation loop action symbol is shortly referred to as a business operation loop transfer view in accordance with name of the action symbol; names of other transfer views may be deduced by analogy, which will not be repeated; and
the transfer graph receives and responds to command from the actual system modeling environment to establish an input transfer symbol from the business management YWGL component class symbol's business operation state attribute symbol to the business operation loop action symbol's state attribute symbol, wherein the business operation loop action symbol's state attribute symbol, as a Boolean variable, refers to an abbreviation of a state attribute symbol for the business loop operation action symbol to control whether or not operates; and names of the subsequent action's attribute symbols may be deduced by analogy, which will not be repeated.

So far, the business operation loop transfer view is accomplished.

### Business operation transfer view

(null)

### Serial number reset assignment transfer view

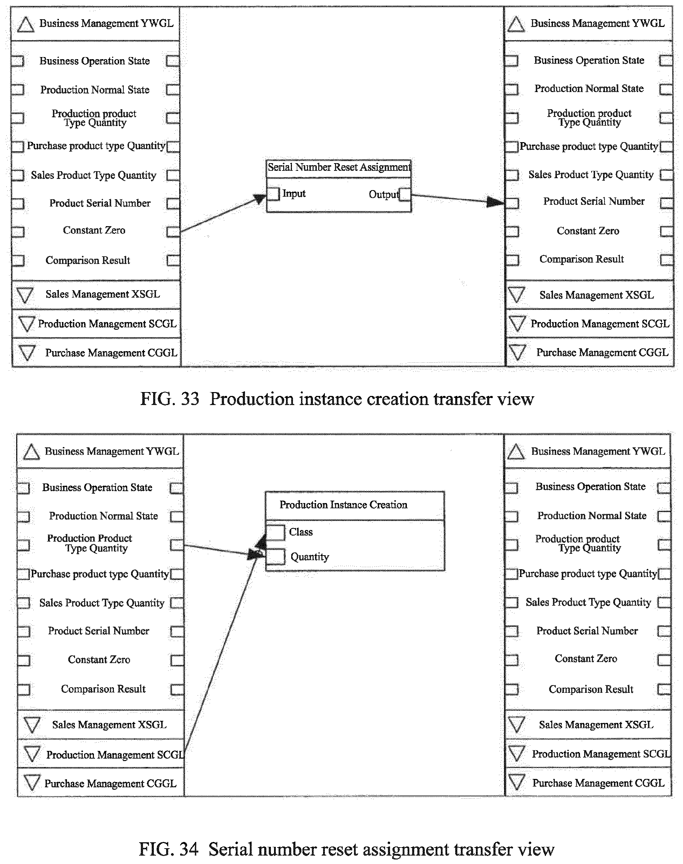

Fig. 33 shows a completed serial number reset assignment transfer view whose construction process is similar to that of "business operation loop transfer view" and the content thereof contains the following transfer symbols:
from the business management YWGL component class symbol's constant zero attribute symbol to the sales serial number reset assignment action symbol's input attribute symbol; and from sales serial number reset assignment action symbol's output attribute symbol to the business management YWGL component class symbol's product serial number attribute symbol.

### Production instance creation transfer view

Fig. 34 shows a completed production instance creation transfer view whose construction process is similar to that of the "business operation loop transfer view" and the content thereof contains the following transfer symbols:
from the production management SCGL component class symbol's name attribute symbol to production instance creation action symbol's type attribute symbol; and from the produced quantity attribute symbol of business management YWGL component class symbol's product type attribute symbol to the quantity attribute symbol of production instance creation action symbol.

### Production configuration traversal transfer view

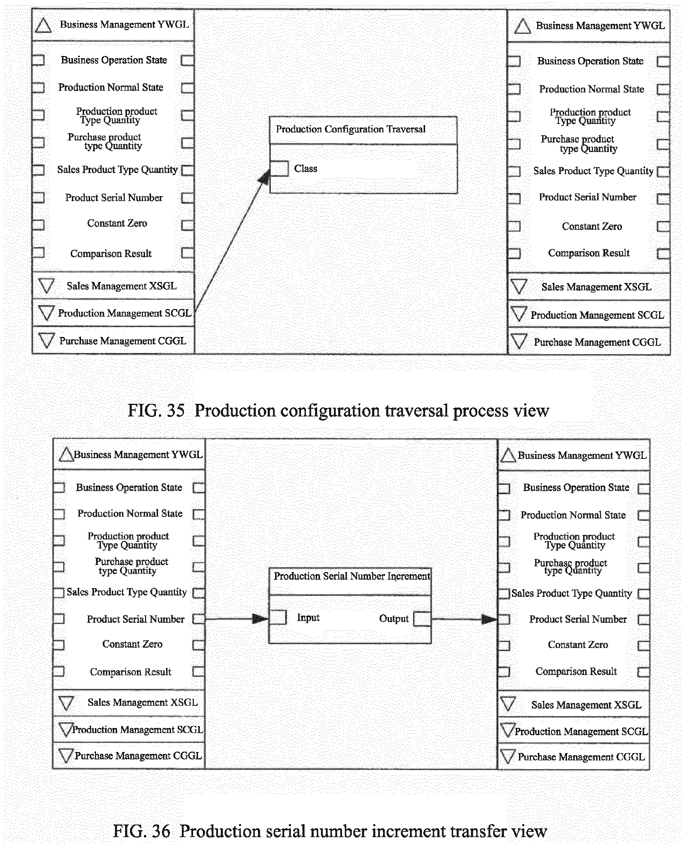

Fig. 35 shows a completed production configuration traversal transfer view whose construction process is similar to that of the "business operation loop transfer view" and the content thereof contains the following transfer symbols:
from the production management SCGL component class symbol's name attribute symbol to the production configuration traversal action symbol's type attribute symbol.

### Production serial number increment transfer view

Fig. 36 shows a completed production serial number increment transfer view whose construction process is similar to that of the "business operation loop transfer view" and the content thereof contains the following transfer symbols:
from the business management YWGL component class symbol's product serial number attribute symbol to production serial number increment action symbol's input attribute symbol; and from production serial number increment action symbol's output attribute symbol to business management YWGL component class symbol's product serial number attribute symbol.

### Production serial number assignment transfer view

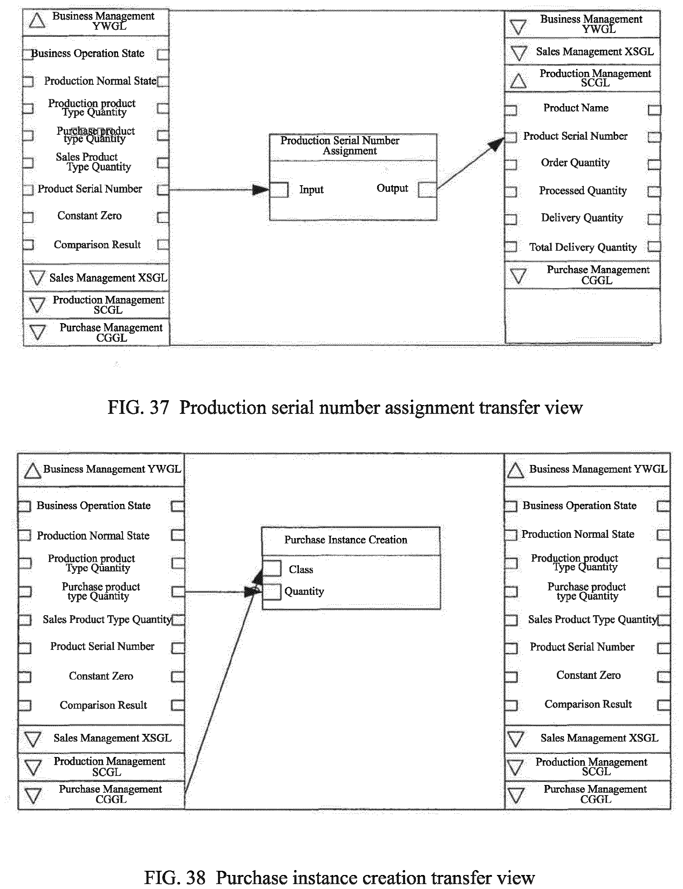

Fig. 37 shows a completed production serial number assignment transfer view whose construction process is similar to that of the "business operation loop transfer view" and the content thereof contains the following transfer symbols:
from business management YWGL component class symbol's product serial number attribute symbol to production serial number assignment action symbol's input attribute symbol; and from production serial number assignment action symbol's output attribute symbol to production management SCGL component class symbol's product serial number attribute symbol.

### Purchase instance creation transfer view

Fig. 38 shows a completed purchase instance creation transfer view whose construction process is similar to that of the "business operation loop transfer view" and the content thereof contains the following transfer symbols:
from the purchase management CGGL component class symbol's name attribute symbol to purchase instance creation action symbol's type attribute symbol; and from purchase product type quantity attribute symbol of business management YWGL component class symbol to purchase instance creation action symbol's instance quantity attribute symbol.

### Purchase configuration traversal transfer view

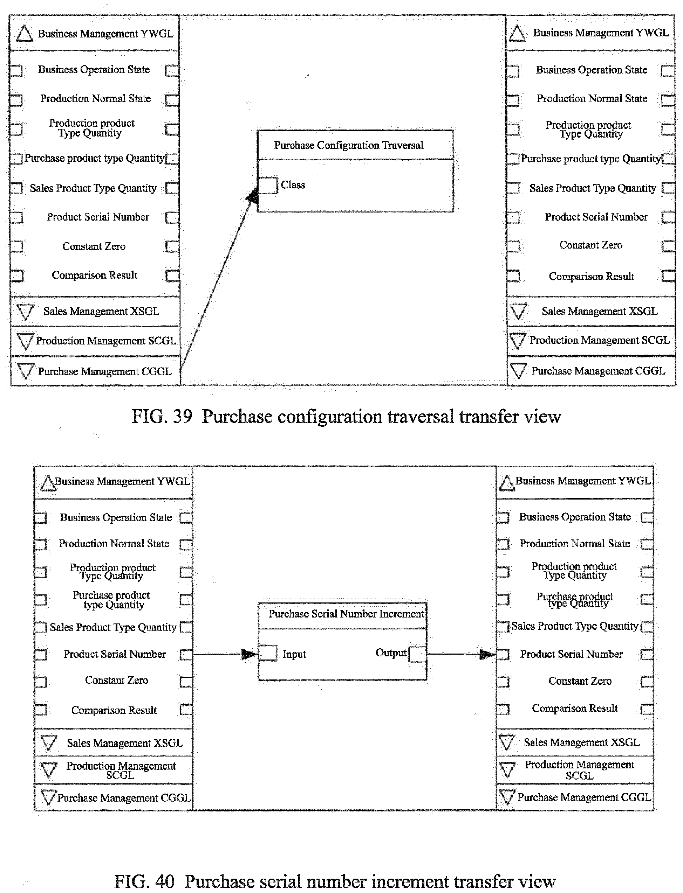

Fig. 39 shows a completed purchase configuration traversal transfer view whose construction process is similar to that of the "business operation loop transfer view" and the content thereof contains the following transfer symbols:
from purchase management CGGL component class symbol's name attribute symbol to purchase configuration traversal action symbol's type attribute symbol.

### Purchase serial number increment transfer view

Fig. 40 shows a completed purchase serial number increment transfer view whose construction process is similar to that for the "business operation loop transfer view" and the content thereof contains the following transfer symbols:
from the business management YWGL component class symbol's product serial number attribute symbol to purchase serial number increment action symbol's input attribute symbol; and from purchase serial number increment action symbol's output attribute symbol to business management YWGL component class symbol's product serial number attribute symbol.

### Purchase serial number assignment transfer view

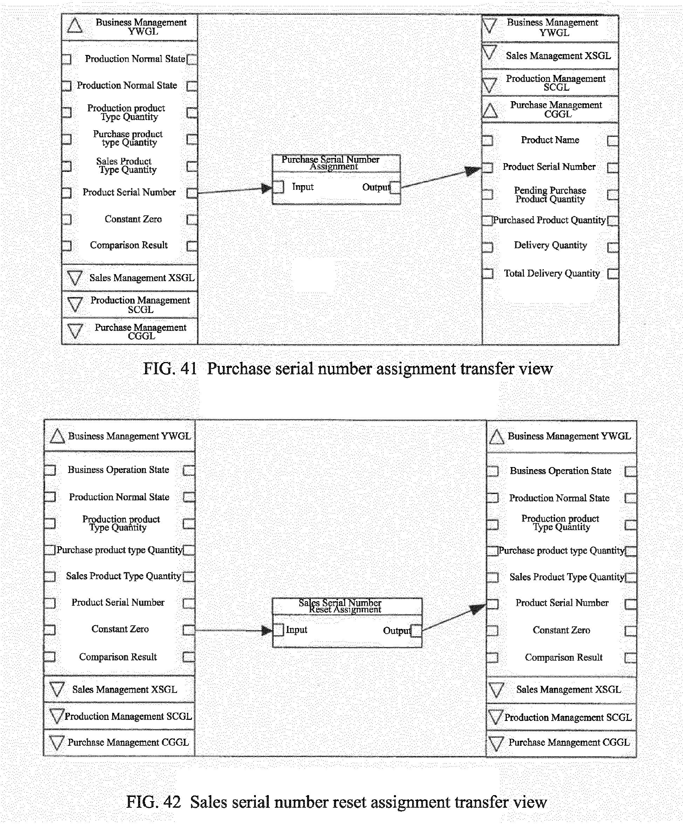

Fig. 41 shows a completed purchase serial number assignment transfer view whose construction process is similar to that of the "business operation loop transfer view" and the content thereof contains the following transfer symbols:
from the business management YWGL component class symbol's product serial number attribute symbol to purchase serial number assignment action symbol's input attribute symbol; and from purchase serial number assignment action symbol's output attribute symbol to purchase management CGGL component class symbol's product serial number attribute symbol.

### Sales serial number reset assignment transfer view

Fig. 42 shows a completed sales serial number reset assignment transfer view whose construction process is similar to that of the "business operation loop transfer view" and the content thereof contains the following transfer symbols:
from the business management YWGL component class symbol's constant zero attribute symbol to the sales serial number reset assignment action symbol's input attribute symbol; and from the sales serial number reset assignment action symbol's output attribute symbol to business management YWGL component class symbol's product serial number attribute symbol.

### Sales instance creation transfer view

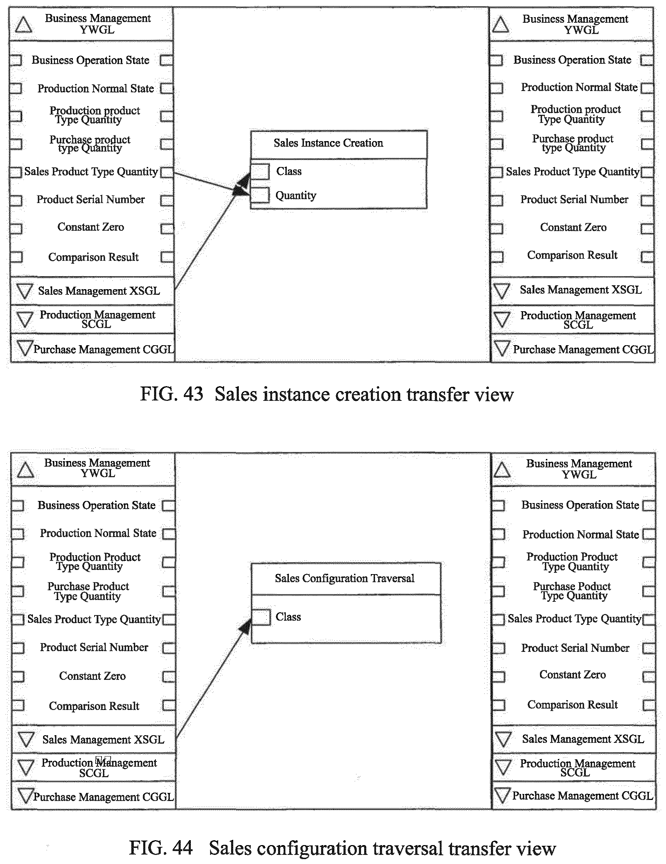

Fig. 43 shows a completed sales instance creation transfer view whose construction process is similar to that of the "business operation loop transfer view" and the content thereof contains the following transfer symbols:
from the sales management CGGL component class symbol's name attribute symbol to sales instance creation action symbol's type attribute symbol; and from business management YWGL component class' sales product type quantity attribute symbol to sales instance creation action symbol's quantity attribute symbol.

### Sales configuration transfer view

Fig. 44 shows a completed sales configuration transfer view whose construction process is similar to that of the "business operation loop transfer view" and the content thereof contains the following transfer symbols:
from the sales management XSGL component class symbol's name attribute symbol to sales configuration traversal action symbol's type attribute symbol.

### Sales serial number increment transfer view

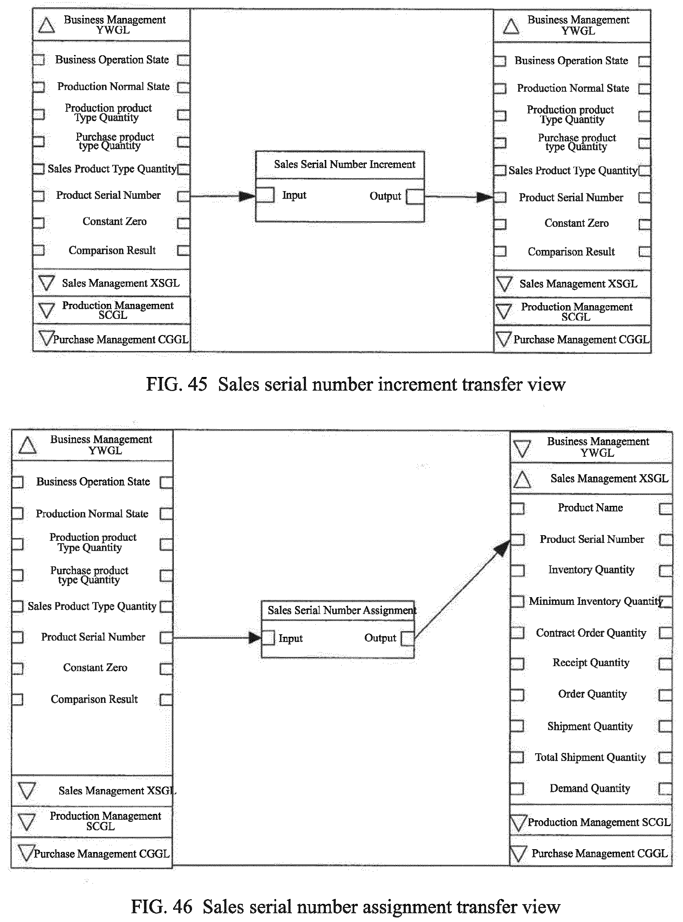

Fig. 45 shows a completed sales serial number increment transfer view whose construction process is similar to that of the "business operation loop transfer view" and the content thereof contains the following transfer symbols:
from the business management YWGL component class symbol's product serial number attribute symbol to sales serial number increment action symbol's input attribute symbol; and from sales serial number increment action symbol's output attribute symbol to business management YWGL component class symbol's product serial number attribute symbol.

### Sales serial number assignment transfer view

Fig. 46 shows a completed sales serial number assignment transfer view whose construction process is similar to that of the "business operation loop transfer view" and the content thereof contains the following transfer symbols:
from the business management YWGL component class symbol's product serial number attribute symbol to sales serial number assignment action symbol's input attribute symbol; and from sales serial number assignment action symbol's output attribute symbol to sales management XSGL component class symbol's product serial number attribute symbol.

### Sales-production configuration traversal transfer view

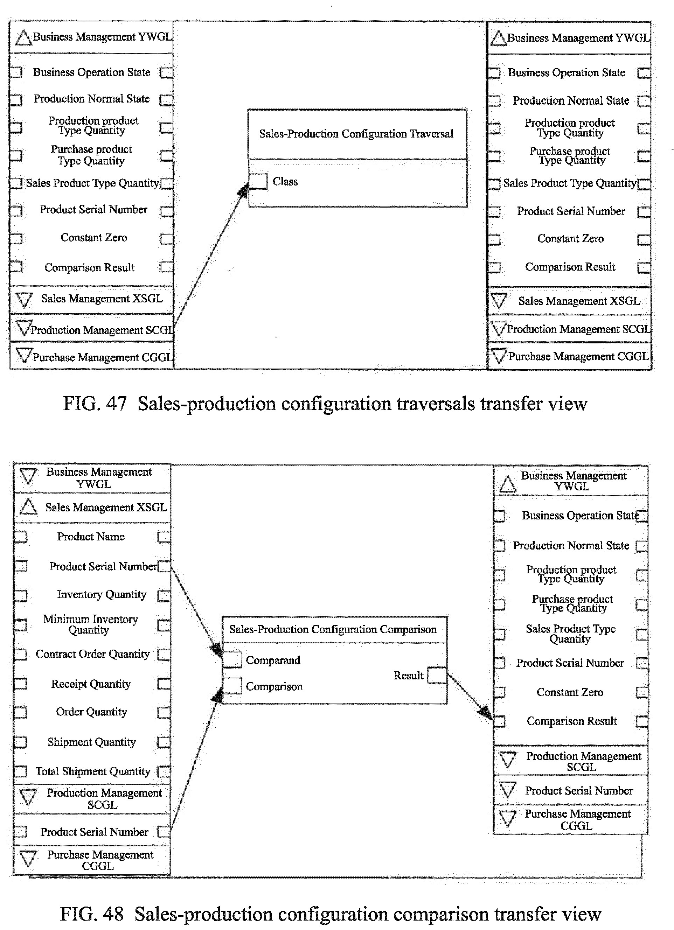

Fig. 47 shows a completed sales-production configuration traversal transfer view whose construction process is similar to that of the "business operation loop transfer view" and the content thereof contains the following transfer symbols:
from the production management SCGL component class symbol's name attribute symbol to sales-production configuration traversal action symbol's type attribute symbol.

### Sales-production configuration comparison transfer view

Fig. 48 shows a completed sales-production configuration comparison transfer view whose construction process is similar to that of the "business operation loop transfer view" and the content thereof contains the following transfer symbols:
from the sales management XSGL component class symbol's product serial number attribute symbol to sales-production configuration comparison action symbol's comparison attribute symbol; from the production management SCGL component class symbol's product serial number attribute symbol to sales-production configuration comparison action symbol's comparison attribute symbol; and from the sales-production configuration comparison action symbol's result attribute symbol to the business management YWGL component class symbol's comparison result attribute symbol.

### Sales-production configuration condition transfer view

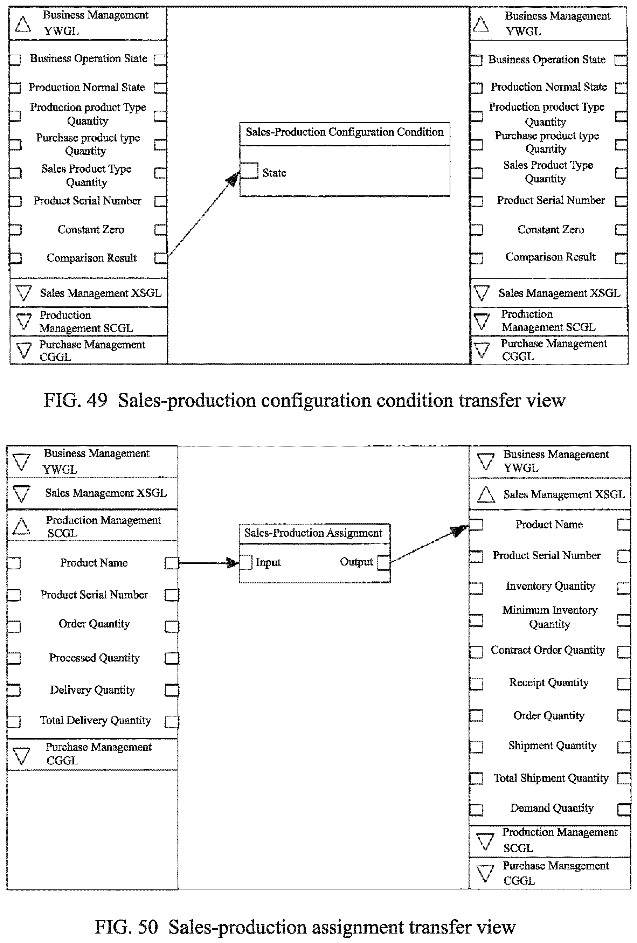

Fig. 49 shows a completed sales-production configuration condition transfer view whose construction process is similar to that of the "business operation loop transfer view" and the content thereof contains the following transfer symbols:
from the business management YWGL component class symbol's comparison result attribute symbol to sales-production configuration condition action symbol's state attribute symbol.

### Sales-production assignment transfer view

Fig. 50 shows a completed sales-production assignment transfer view whose construction process is similar to that of the "business operation loop transfer view" and the content thereof contains the following transfer symbols:
from the production management SCGL component class symbol's product name attribute symbol to sales-production assignment action symbol's input attribute symbol; and sales-production assignment action symbol's output attribute symbol to sales management XSGL component class symbol's product name attribute symbol.

### Sales-purchase configuration traversal transfer view

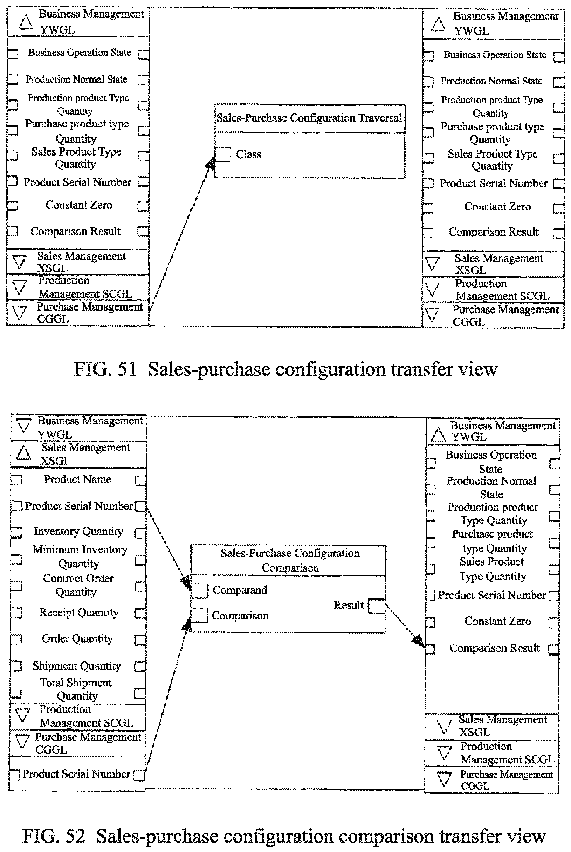

Fig. 51 shows a completed sales-purchase configuration traversal transfer view whose construction process is similar to that of the "business operation loop transfer view" and the content thereof contains the following transfer symbols:
from the purchase management CGGL component class symbol's name attribute symbol to sales-purchase configuration traversal action symbol's type attribute symbol.

### Sales-purchase configuration comparison transfer view

Fig. 52 shows a completed sales-purchase configuration comparison transfer view whose construction process is similar to that of the "business operation loop transfer view" and the content thereof contains the following transfer symbols:
from the sales management XSGL component class symbol's product serial number attribute symbol to the sales-purchase configuration comparison action symbol's comparison attribute symbol; from the purchase management CGGL component class symbol's product serial number attribute symbol to sales-purchase configuration comparison action symbol's comparison attribute symbol; and from the sales-purchase configuration comparison action symbol's result attribute symbol to business management YWGL component class symbol's comparison result attribute symbol.

### Sales-purchase configuration condition transfer view

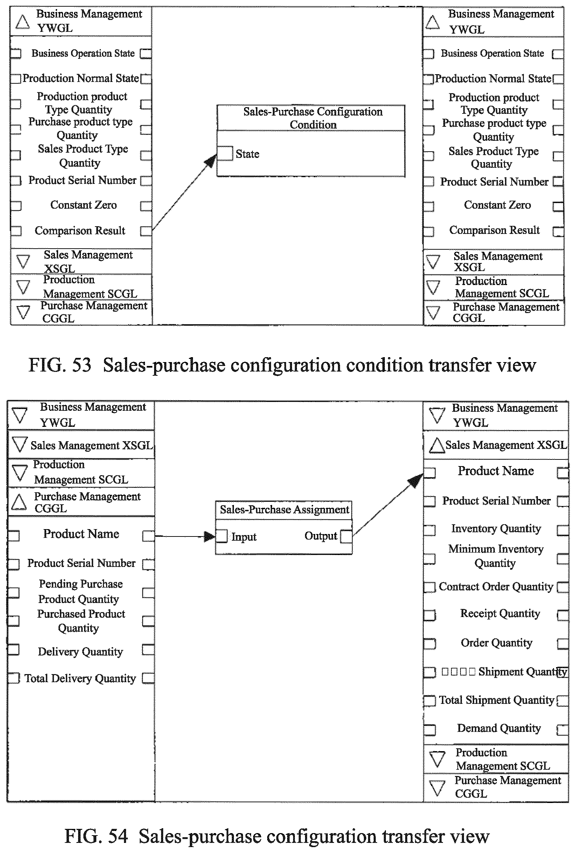

Fig. 53 shows a completed sales-purchase configuration condition transfer view whose construction process is similar to that of the "business operation loop transfer view" and the content thereof contains the following transfer symbols:
from the business management YWGL component class symbol's comparison result attribute symbol to the sales-purchase configuration condition action symbol's state attribute symbol.

### Sales-purchase configuration transfer view

Fig. 54 shows a completed sales-purchase configuration transfer view whose construction process is similar to that of the "business operation loop transfer view" and the content thereof contains the following transfer symbols:
from the purchase management CGGL component class symbol's product name attribute symbol to sales-purchase assignment action symbol's input attribute symbol; and from sales-purchase assignment action symbol's output attribute symbol to sales management XSGL component class symbol's product name attribute symbol.

### Production operation traversal transfer view

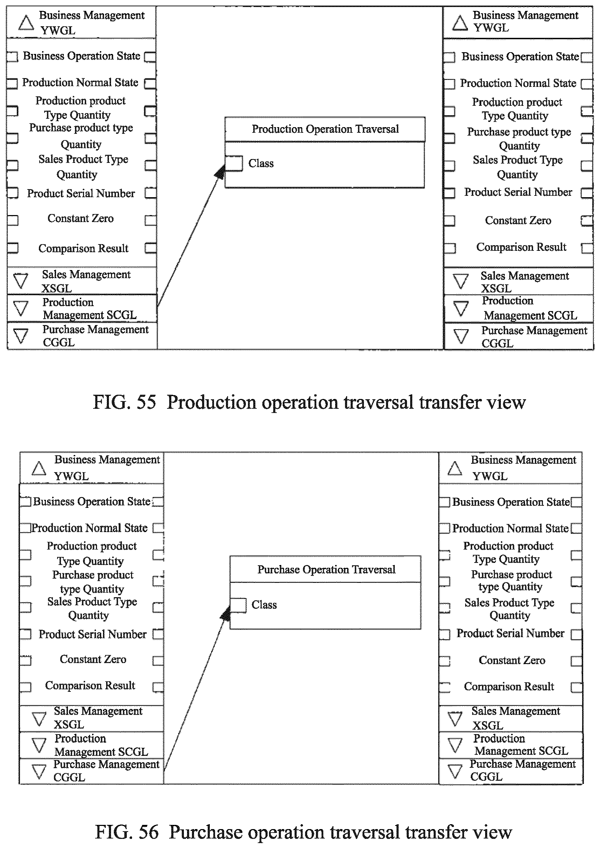

Fig. 55 shows a completed production operation traversal transfer view whose construction process is similar to that of the "business operation loop transfer view" and the content thereof contains the following transfer symbols:
from the production management SCGL component class symbol's name attribute symbol to production operation traversal action symbol's type attribute symbol.

### Production planning transfer view

(null)

### Production implementation transfer view

(null)

### Production delivery transfer view

(null)

### Purchase operation traversal transfer view

Fig. 56 shows a completed purchase operation traversal transfer view whose construction process is similar to that of the "business operation loop transfer view" and the content thereof contains the following transfer symbols:
from the purchase management CGGL component class symbol's name attribute symbol to purchase operation traversal action symbol's type attribute symbol.

### Purchase implementation transfer view

(null)

### Purchase delivery transfer view

(null)

### Sales operation traversal transfer view

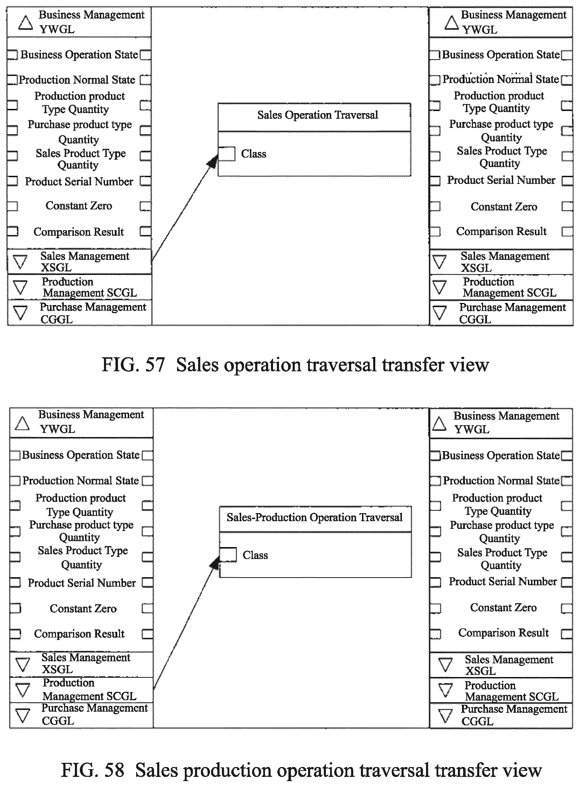

Fig. 57 shows a completed sales operation traversal transfer view whose construction process is similar to that of the "business operation loop transfer view" and the content thereof contains the following transfer symbols:
from the sales management XSGL component class symbol's name attribute symbol to sales operation traversal action symbol's type attribute symbol.

### Sales-production operation traversal transfer view

Fig. 58 shows a completed sales-production operation traversal transfer view whose construction process is similar to that of the "business operation loop transfer view" and the content thereof contains the following transfer symbols:
from the production management SCGL component class symbol's name attribute symbol to sales-production operation traversal action symbol's type attribute symbol.

### Sales-production operation comparison transfer view

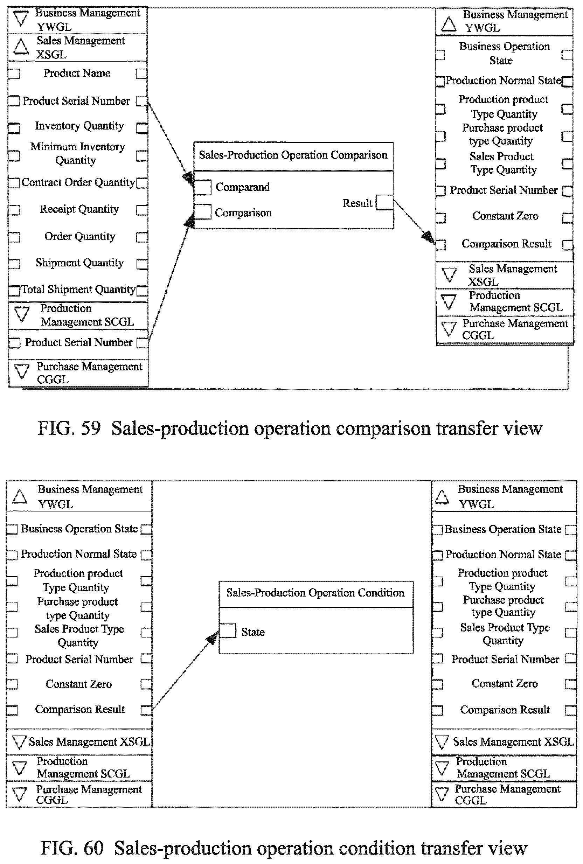

Fig. 59 shows a completed sales-production comparison operation transfer view whose construction process is similar to that of the "business operation loop transfer view" and the content thereof contains the following transfer symbols:
from the sales management XSGL component class symbol's product serial number attribute symbol to sales-production operation comparison action symbol's comparison attribute symbol; from production management SCGL component class symbol's product serial number attribute symbol to sales-production operation comparison action symbol's comparison attribute symbol; and sales-production operation comparison action symbol's result attribute symbol to business management YWGL component class symbol's comparison result attribute symbol.

### Sales-production operation condition transfer view

Fig. 60 shows a completed sales-production operation condition transfer view whose construction process is similar to that of the "business operation loop transfer view" and the content thereof contains the following transfer symbols:
from the business management YWGL component class symbol's comparison result attribute symbol to the sales-production operation condition action symbol's state attribute symbol.

### Production-sales receipt transfer view

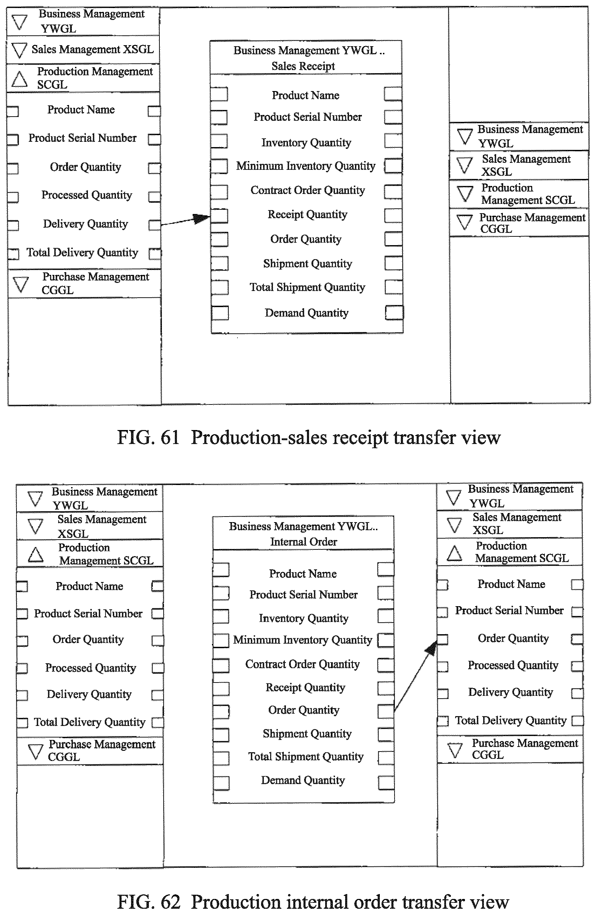

Fig. 61 shows a completed production-sales receipt transfer view whose construction process is similar to that of the "business operation loop transfer view" and the content thereof contains the following transfer symbols:
from the production management SCGL component class symbol's delivery quantity attribute symbol to production-sales receipt action symbol's receipt quantity attribute symbol.

### Production-sales shipment transfer view

(null)

### Production internal order transfer view

Fig. 62 shows a completed production internal order transfer view whose construction process is similar to that of the "business operation loop transfer view" and the content thereof contains the following transfer symbols:
from the production internal order action symbol's order quantity attribute symbol to production management SCGL component class symbol's order quantity attribute symbol.

### Sales-purchase operation traversal transfer view

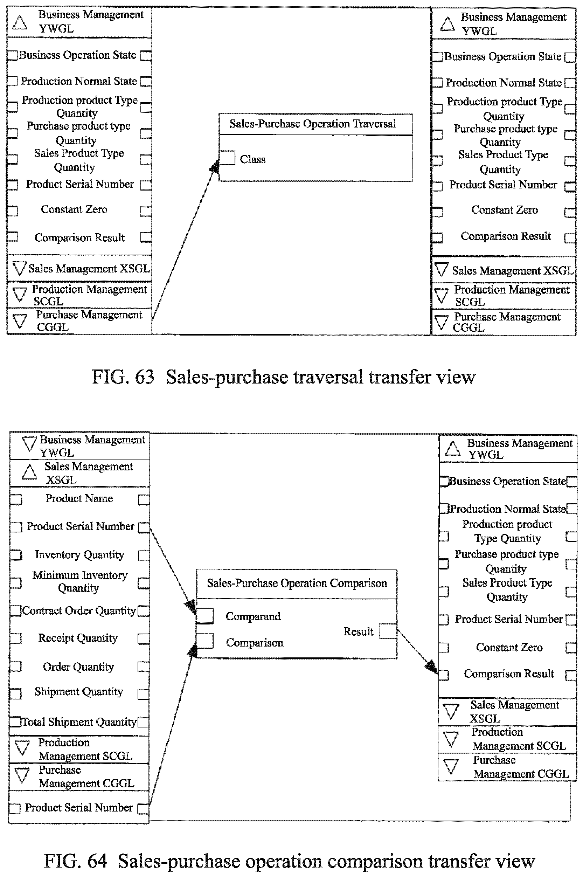

Fig. 63 shows a completed sales-purchase operation traversal transfer view whose construction process is similar to that of the "business operation loop transfer view" and the content thereof contains the following transfer symbols:
from the purchase management CGGL component class symbol's name attribute symbol to the sales-purchase operation traversal action symbol's type attribute symbol.

### Sales-purchase operation comparison transfer view

Fig. 64 shows a completed the sales-purchase operation comparison transfer view whose construction process is similar to that of the "business operation loop transfer view" and the content thereof contains the following transfer symbols:
from the sales management XSGL component class symbol's product serial number attribute symbol to sales-purchase operation comparison action symbol's comparison attribute symbol; from the purchase management CGGL component class symbol's product serial number attribute symbol to sales-purchase operation comparison action symbol's comparison attribute symbol; and from the sales-purchase operation comparison action symbol's result attribute symbol to the business management YWGL component class symbol's comparison result attribute symbol.

### Sales-purchase operation condition transfer view

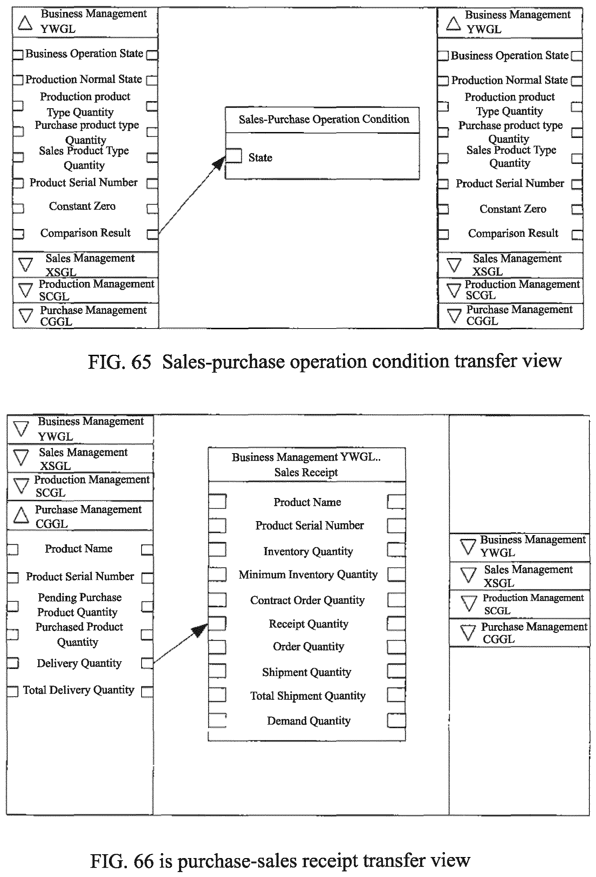

Fig. 65 shows a completed sales-purchase operation condition transfer view whose construction process is similar to that of the "business operation loop transfer view" and the content thereof contains the following transfer symbols:
from the business management YWGL component class symbol's comparison result attribute symbol to the sales-purchase operation condition action symbol's state attribute symbol.

### Purchase-sales receipt transfer view

Fig. 66 shows a completed purchase-sales receipt transfer view whose construction process is similar to that of the "business operation loop transfer view" and the content thereof contains the following transfer symbols:
from the purchase management CGGL component class symbol's delivery quantity attribute symbol to the purchase-sales receipt action symbol's receipt quantity attribute symbol.

### Purchase-sales shipment transfer view

(null)

### Purchase internal order transfer view

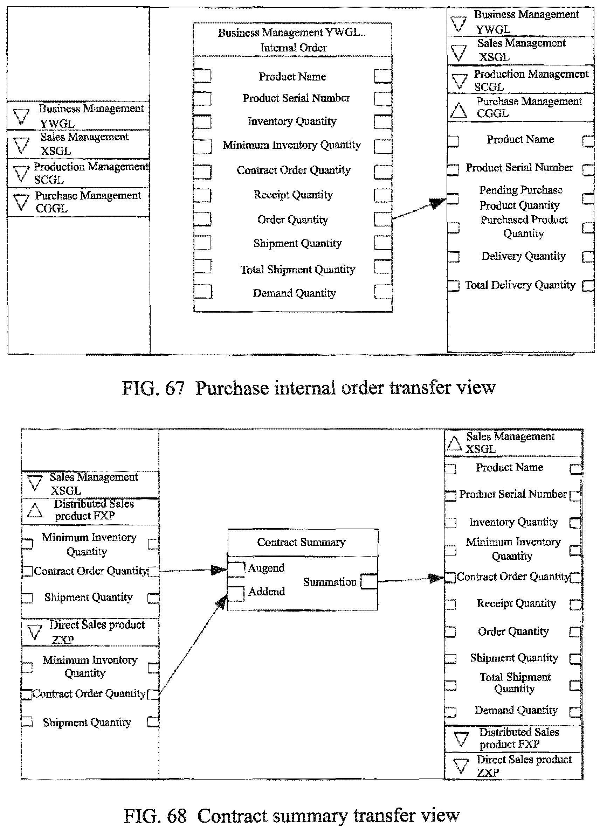

Fig. 67 shows a completed purchase internal order transfer view whose construction process is similar to that of the "business operation loop transfer view" and the content thereof contains the following transfer symbols:
from the purchase internal order action symbol's order quantity attribute symbol to purchase management CGGL component class symbol's pending purchasing quantity attribute symbol.

### Contract summary transfer view

Fig. 68 shows a completed contract summary transfer view whose construction process is similar to that of the "business operation loop transfer view" and the content thereof contains the following transfer symbols:
from the distributed sales product FXP component class symbol's contract order quantity attribute symbol to the contract summary action symbol's augend attribute symbol; from the direct sales product ZXP component class symbol's contract order quantity attribute symbol to the contract summary action' addend attribute symbol; and from the contract summary action symbol's sum attribute symbol to the sales management XSGL component class symbol's contract order quantity attribute symbol.

### Demand summary transfer view

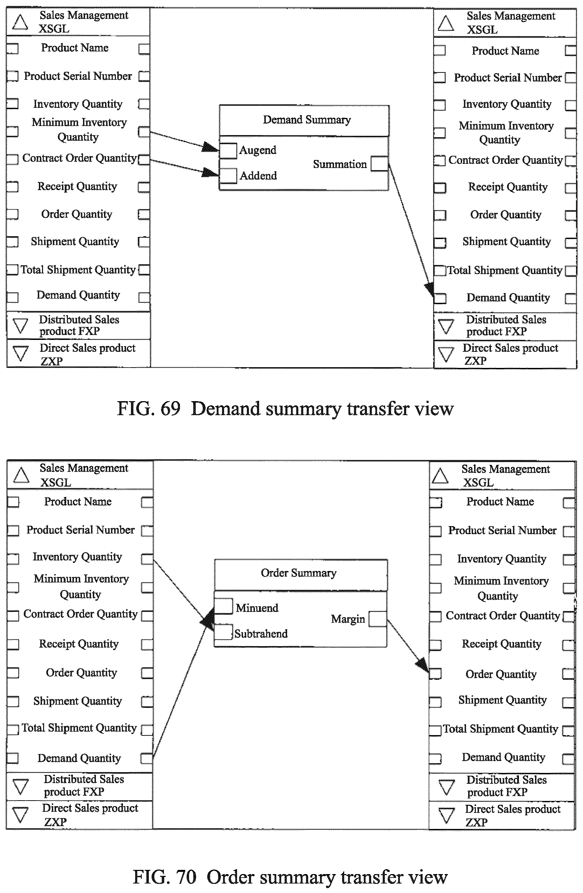

Fig. 69 shows a completed demand summary transfer view whose construction process is similar to that of the "business operation loop transfer view" and the content thereof contains the following transfer symbols:
from the sales management XSGL component class symbol's minimum inventory attribute symbol to an augend attribute symbol of the demand summary action symbol; from the sales management XSGL component class symbol's contract order quantity attribute symbol to the demand summary action symbol's addend attribute symbol; and from the demand summary action symbol's sum attribute symbol to the sales management XSGL component class symbol's demand quantity attribute symbol.

### Order summary transfer view

Fig. 70 shows a completed order summary transfer view whose construction process is similar to that of the "business operation loop transfer view" and the content thereof contains the following transfer symbols:
from the sales management XSGL component class symbol's demand quantity attribute symbol the order summary action symbol's minuend attribute symbol; from the sales management XSGL component class symbol's inventory quantity attribute symbol to order summary action symbol's subtrahend attribute symbol; and from order summary action symbol's margin attribute symbol to the sales management XSGL component class symbol's order quantity attribute symbol.

### Shipment summary transfer view

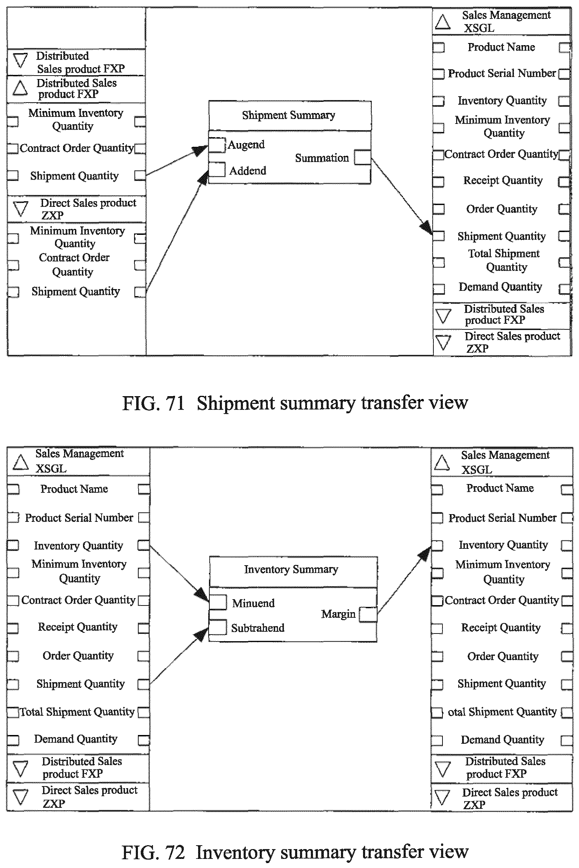

Fig. 71 shows a completed shipment summary transfer view whose construction process is similar to that of the "business operation loop transfer view" and the content thereof contains the following transfer symbols:
from the distributed sales product FXP component class symbol's shipment quantity attribute symbol to shipment summary action symbol's augend attribute symbol; from the direct sales product ZXP component class symbol's shipment quantity attribute symbol to shipment summary action symbol's addend attribute symbol; and from shipment summary action symbol's sum attribute symbol to the sales management XSGL component class symbol's shipment quantity attribute symbol.

### Inventory summary transfer view

Fig. 72 shows a completed inventory summary transfer view whose construction process is similar to that of the "business operation loop transfer view" and the content thereof contains the following transfer symbols:
from the sales management XSGL component class symbol's inventory quantity attribute symbol to inventory summary action symbol's minuend attribute symbol; from the sales management XSGL component class symbol's shipment quantity attribute symbol to inventory summary action symbol's subtrahend attribute symbol; and from the inventory summary action symbol's margin attribute symbol to the sales management XSGL component class symbol's inventory quantity attribute symbol.

### Receipt summary transfer view

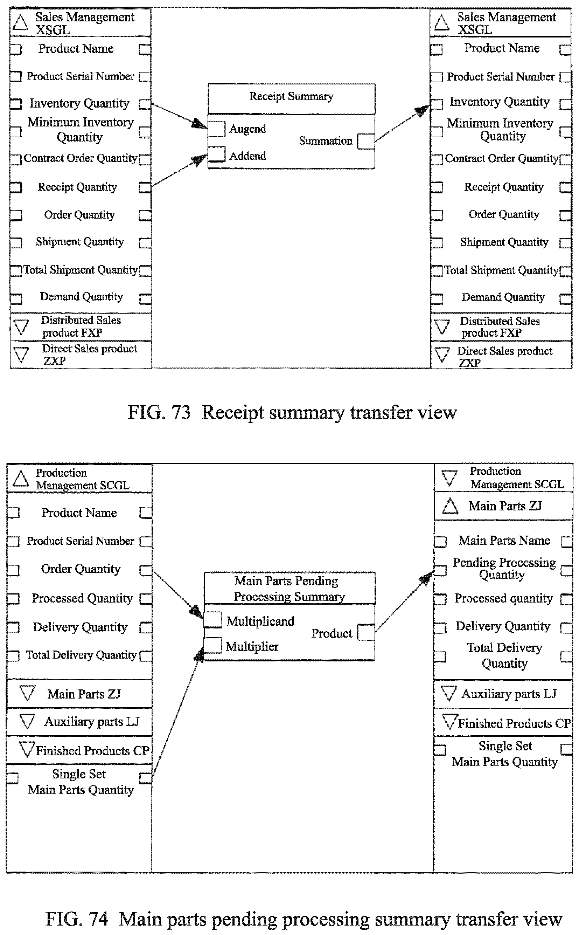

Fig. 73 shows a completed receipt summary transfer view whose construction process is similar to that of the "business operation loop transfer view" and the content thereof contains the following transfer symbols:
from the sales management XSGL component class symbol's inventory quantity attribute symbol to receipt summary action symbol's augend attribute symbol; from the sales management XSGL component class symbol's receipt quantity attribute symbol to receipt summary action symbol's addend attribute symbol; and from receipt summary action symbol's sum attribute symbol to the sales management XSGL component class symbol's inventory quantity attribute symbol.

### Main parts pending processing summary transfer view

Fig. 74 shows a completed main parts pending processing summary transfer view whose construction process is similar to that of the "business operation loop transfer view" and the content thereof contains the following transfer symbols:
from the production management SCGL component class symbol's order quantity attribute symbol to the main parts pending processing summary action symbol's multiplicand attribute symbol; from the finished products CP component class symbol's single set main parts quantity attribute symbol to main parts pending processing summary action symbol's multiplier attribute symbol; and from main parts pending processing summary action symbol's product attribute symbol to the main parts ZJ component class symbol's pending processing quantity attribute symbol.

### Auxiliary parts pending processing summary transfer view

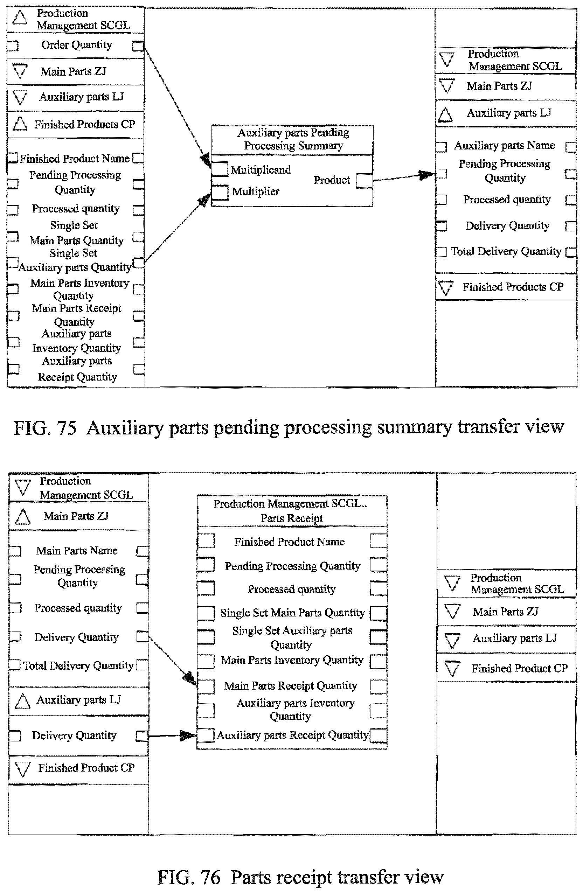

Fig. 75 shows a processed auxiliary parts pending processing summary transfer view whose construction process is similar to that of the "business operation loop transfer view" and the content thereof contains the following transfer symbols:
from the production management SCGL component class symbol's order quantity attribute symbol to auxiliary parts pending processing summary action symbol's multiplicand attribute symbol; from the finished products CP component class symbol's single set auxiliary parts quantity attribute symbol to auxiliary parts pending processing summary action symbol's multiplier attribute symbol; and from auxiliary parts pending processing summary action symbol's product attribute symbol to the main parts ZJ component class symbol's pending processing quantity attribute symbol.

### Main parts processing transfer view

(null)

### Main parts delivery transfer view

(null)

### Auxiliary parts processing transfer view

(null)

### Auxiliary parts delivery transfer view

(null)

### Parts receipt transfer view

Fig. 76 shows a completed parts receipt transfer view whose construction process is similar to that of the "business operation loop transfer view" and the content thereof contains the following transfer symbols:
from delivery quantity attribute symbol of the main parts ZJ component class symbol to the main parts receipt action symbol's receipt attribute symbol; and from the auxiliary parts LJ component class' delivery quantity attribute symbol to the auxiliary parts receipt action symbol's receipt attribute symbol.

### Finished product assembly transfer view

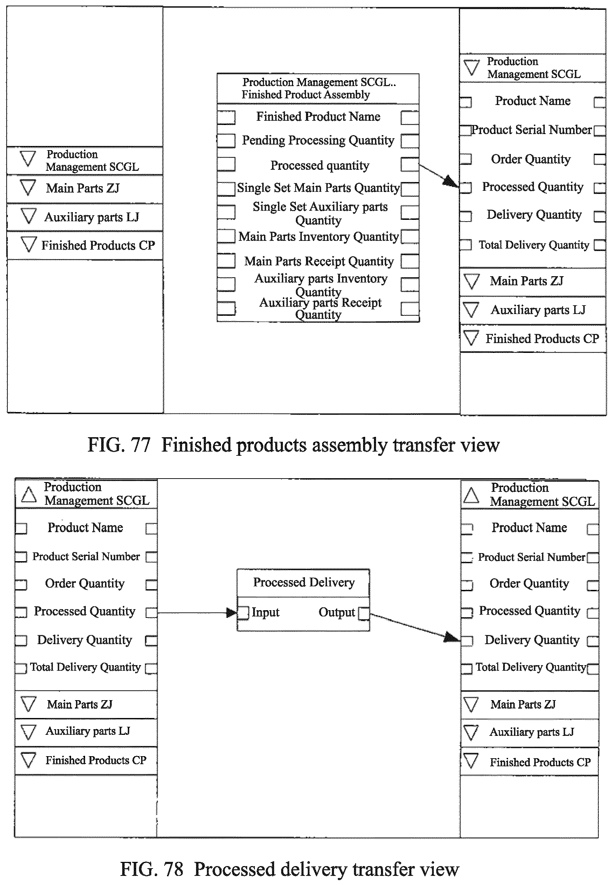

Fig. 77 shows a completed finished product assembly transfer view whose construction process is similar to that of the "business operation loop transfer view" and the content thereof contains the following transfer symbols:
from finished product assembly action symbol's processed quantity attribute symbol to the production management SCGL component class symbol's processed quantity attribute symbol.

### Processed delivery transfer view

Fig. 78 shows a completed processed delivery transfer view whose construction process is similar to that of the "business operation loop transfer view" and the content thereof contains the following transfer symbols:
from the production management SCGL component class symbol's processed quantity attribute symbol to processed delivery action symbol's input attribute symbol; and from the processed delivery action symbol's output attribute symbol to production management SCGL component class symbol's processed delivery quantity attribute symbol.

### Total delivery quantity summary transfer view

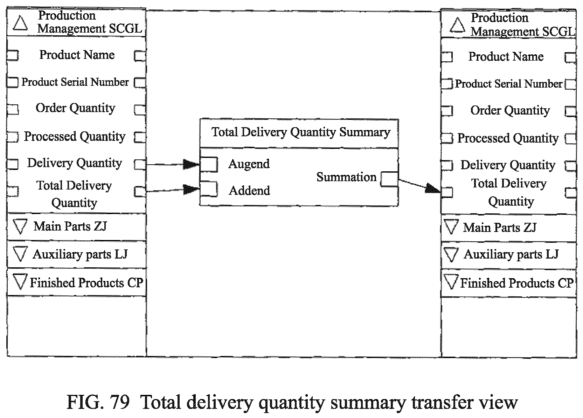

Fig. 79 shows a completed total delivery quantity summary transfer view whose construction process is similar to that of the "business operation loop transfer view" and the content thereof contains the following transfer symbols:
from the production management SCGL component class symbol's total delivery quantity attribute symbol to total delivery quantity summary action symbol's augend attribute symbol; from production management SCGL component class symbol's a total delivery quantity attribute symbol to the total delivery quantity summary action symbol's addend attribute symbol; and from total delivery quantity summary action symbol's sum attribute symbol to the production management SCGL component class symbol's total delivery quantity.

So far, the business management YWGL system view constituted by a hierarchy view, interface views, algorithm views, process views, and transfer views in this embodiment has been accomplished.

This embodiment demonstrates how a regular management personnel, without knowledge of any existing complex system modeling languages, without knowledge of any computer programming language, and without dependence on any professional modeler nor any application developer, by using the present invention, independently constructs an executable business management system view based on his vision in business management within a relatively short period of time. The constructed system view is not only clear and simple but also the quality of the constructed system view is significantly higher and the time spent is significantly shorter.

Compared with developing a business management system view with the cooperation of professional modelers and/or application developers, the present invention by which the same manager independently develops the business management system view, achieves remarkable results as follows:
(1) higher quality: the completed system view meets the minds of the managers and avoids the possible bias in understanding of the business management system view between the managers and professional modelers or application developers;
(2) shorter time spent: the entire period of time spent to view is shortened to 1/5 of the original time period because the complex and frequent communications between the managers and the professional modelers or the application developers are eliminated, thereby greatly saving energy and money.

## Claims

1. A system element view-based visual modeling method for constructing system view by means of a computer readable storage medium having a computer readable program code stored therein, said computer readable program code containing instructions executable by a processor of a computer system to implement the visual modeling method based on a system element view for constructing system views by processing data conforming to the system element view and describing the system view, wherein the system view refers to a visual representation of a system model and wherein the system element view refers to a visual representation of a system element-model, said system element view comprising:
a hierarchy graph which represents a hierarchy view in a tree structure of which a node is a component class symbol and which is used as a template to be configured in an actual system modeling environment to form the hierarchy view, wherein the component class symbol refers to a visual representation of a component class, wherein the hierarchy view refers to a visual representation of a hierarchy model, and wherein the tree structure, of which the nodes are component class symbols, is referred as a hierarchy tree;
an interface graph which represents interface views by an optional structure of a set of attribute symbols, a set of function symbols, and a set of event symbols, the interface graph is used as a template in the actual system modeling environment to be configured to form the interface views, wherein the interface view refers to a visual representation of an interface model, wherein the attribute symbol, the function symbol, and the event symbol refer to a representation of an attribute, a representation of a function, and a representation of an event, respectively, and wherein the function symbols include both algorithm function symbols as visual representations of algorithm functions and process function symbols as visual representations of process functions;
an algorithm graph which describes algorithm views by a tree structure of which nodes are operator symbols and which is used as a template in the actual system modeling environment to be configured to form the algorithm view, wherein the algorithm view refers to a visual representation of an algorithm model and wherein the operator symbol refers to a visual representation of an operator;
a process graph which describes process views by combining action symbols as nodes, and which is used as a template in the actual system modeling environment to be configured to form the process views, wherein the process view refers to a visual representation of a process model, and wherein the action symbol refers to a visual representation of an action; and
a transfer graph which describes transfer views by both a set of input transfer symbols and a set of output transfer symbols and which is used as a template in the actual system modeling environment to be configured to form the transfer views, wherein the transfer view refers to a visual representation of a transfer view, and the transfer symbol in the set of the transfer symbols refers to a visual representation of a transfer,
the specific steps to construct the system view by said five graphs being as follows:
1) constructing the hierarchy view: the hierarchy graph reading in hierarchy view commands from the actual system modeling environment, wherein hierarchy view commands refers to commands such as creating a component class symbol, adding a component class symbol, selecting a component class symbol, naming a component class symbol, and deleting a component class symbol for the hierarchy tree and wherein the hierarchy graph performs corresponding operations on the component class symbol nodes in the hierarchy tree in response to hierarchy view commands to obtain the hierarchy view;
2) constructing the interface views: constructing an interface view for each component class symbol of the hierarchy view obtained in the step 1), the steps for constructing each interface view including: the interface graph reading in interface view commands from the actual system modeling environment, wherein interface view commands refers to commands such as creating, selecting, naming, and deleting the attribute symbols, the function symbols, and the event symbols of involved component class symbol, wherein the interface graph performs corresponding operations in response to interface view commands to obtain the interface view, and wherein the algorithm views corresponding to algorithm function symbols are constructed by step 3) and the process views corresponding to process function symbols are constructed by the step 4);
3) constructing the algorithm views: constructing an algorithm view for each algorithm function symbol obtained in the step 2), the steps for constructing each algorithm view including: the algorithm graph reading in algorithm view commands from the actual system modeling environment;
4) constructing the process views: constructing a process view for each process function symbol obtained in the step 2), the steps for constructing each process view including: the process graph reading in process view command from the actual system modeling environment; and
5) constructing the transfer views: constructing a transfer view for each action symbol in the process view obtained in the step 4), the steps for constructing each transfer view including: the transfer graph reading in transfer view commands from the actual system modeling environment, wherein transfer view commands refers to commands on such as adding a transfer symbol, adding a transfer symbol, and deleting a transfer symbol and wherein the transfer graph performs corresponding operations in response to transfer view commands to obtain the transfer view,
thereby the system view constructed by the hierarchy view, interface views, algorithm views, process views, and transfer views being accomplished.

2. The system element view-based visual modeling method for constructing system view according to claim 1, wherein a combination of the process graph and the transfer graph provide a universal means to represent and configure functions; the algorithm graph provides a simplified alternative for replacing the combination of the process graph and the transfer graph if only operator symbols are used to implement the functions.

3. The system element view-based visual modeling method for constructing system view according to claim 1, wherein the system element view has the following modeling rules: the system element view employs a parent-child structure as base recursive unit to recursively and visually describe the system view; the parent-child structure refers to a structure of parent-child relationships in a hierarchy tree, constituted by involved component class symbols and all of child component class symbols thereof.

4. The system element view-based visual modeling method for constructing system view according to claim 1, wherein the specific function symbol of the step 2) can only be either algorithm function symbol or process function symbol, not both.

5. The system element view-based visual modeling method for constructing system view according to claim 1, wherein the algorithm view commands stated in the step 3) refers to commands, such as adding an operator symbol, selecting an operator symbol, naming an operator symbol, as well as adding an assignment symbol, selecting an assignment symbol, and deleting an assignment symbol; the algorithm graph performs corresponding operations in response to the hierarchy view commands to obtain the algorithm view; the operator symbols include both logic operator symbols and computation operator symbols; the tree structure of which nodes are operator symbols is referred to as an algorithm tree; said assignment symbol refers to a visual representation of an assignment, and the set of the algorithm attribute symbols refers to a collection constituted by a set of attribute symbols of the involved component class symbols and sets of attribute symbols of all of operator symbols in the algorithm view.

6. The system element view-based visual modeling method for constructing system view according to claim 1, wherein the process view commands to construct the process view in step 4) refers to commands such as adding an action symbol, selecting an action symbol, naming an action symbol, and deleting an action symbol and the process graph performs corresponding operations in response to the process view commands to obtain the process view; the action symbols include both component action symbols and operator action symbols; said component action symbol refers to a representation of one use of a function symbol in the set of function symbols in the parent-child structure, the set of function symbols in the parent-child structure refers to a collection constituted by the set of function symbols of the involved component class symbol and the sets of function symbols of all child component class symbols in the parent-child structure; the operator action symbol refers to a representation of one use of operator symbol's function symbol; the process views include attribute process views and an event process views, the process graph includes attribute process graph and event process graph, the attribute process graph describes the attribute process view through a process tree as the structure, which is a tree structure constituted by action symbols as nodes; the event process graph describes an event process view by a set of event association symbols as the structure; the event association symbol in the set of event association symbols is an association relationship between an event symbol in a set of event symbols in a parent-child structure and an operator action symbol or a component action symbol; the set of event symbols in the parent-child structure refers to a collection constituted by the set of event symbols of the involved component class symbol and sets of event symbols of all of child component class symbols in the parent-child structure.

7. The system element view-based visual modeling method for constructing system view according to claim 1, wherein besides action attribute symbols which refers to the attribute symbols of the component class symbols where the action symbol is, said attribute symbols relevant to transfer symbols are limited to those in the set of attribute symbols in the parent-child structure, which refers to a collection constituted by the set of the attribute symbols of the involved component class symbol and the sets of the attribute symbols of all of child component class symbols in the parent-child structure.
